(19) **Europäisches Patentamt**

**European Patent Office**

**Office européen des brevets**

(11) **EP 1 615 047 A2**

(12) **EUROPÄISCHE PATENTANMELDUNG**

(43) Veröffentlichungstag:
**11.01.2006 Patentblatt 2006/02**

(51) Int Cl.:
*G01S 7/497* (2006.01)     *G05D 1/02* (2006.01)

(21) Anmeldenummer: **05013993.0**

(22) Anmeldetag: **28.06.2005**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(30) Priorität: **08.07.2004   DE 102004033114**

(71) Anmelder: **IBEO Automobile Sensor GmbH**
**22179 Hamburg (DE)**

(72) Erfinder:
• **Kämpchen, Nico**
**89081 Ulm (DE)**

• **Bühler, Matthias**
**89191 Nellingen (DE)**
• **Dietmayer, Klaus, Prof. Dr.**
**89075 Ulm (DE)**
• **Lages, Ulrich, Dr.**
**21031 Hamburg (DE)**

(74) Vertreter: **Manitz, Finsterwald & Partner GbR**
**Postfach 31 02 20**
**80102 München (DE)**

(54) **Verfahren zur Kalibrierung eines optischen Abstandssensors an einem Fahrzeug**

(57)     Bei dem Verfahren zur wenigstens teilweisen Kalibrierung eines an einem Fahrzeug gehaltenen Abstandsbildsensors für elektromagnetische Strahlung, mittels dessen ein Erfassungsbereich entlang wenigstens einer Abtastfläche abtastbar und ein entsprechendes Abstandsbild erfassbar ist, in Bezug auf eine Ausrichtung der Abtastfläche oder des Abstandsbildsensors relativ zu dem Fahrzeug werden mittels des Abstandsbildsensors Abstände zwischen dem Abstandsbildsensor und Bereichen auf wenigstens einer Kalibrierfläche ermittelt und unter Verwendung der ermittelten Abstände wird ein Wert für eine die Ausrichtung wenigstens teilweise beschreibende Größe ermittelt.

Fig. 2

**EP 1 615 047 A2**

**Beschreibung**

Die vorliegende Erfindung betrifft ein Verfahren zur Kalibrierung eines an einem Fahrzeug gehaltenen Abstandsbildsensors für elektromagnetische Strahlung, mittels dessen ein Erfassungsbereich entlang wenigstens einer Abtastfläche abtastbar und ein entsprechendes Abstandsbild erfassbar ist.

Abstandsbildsensoren sind grundsätzlich bekannt. Mit ihnen können Abstandsbilder ihres Erfassungsbereichs erfasst werden, deren Abstandsbildpunkte Daten in Bezug auf die Lage entsprechender erfasster Punkte bzw. Bereiche auf Gegenständen und insbesondere in Bezug auf den Abstand von dem Abstandsbildsensor enthalten. Der Erfassungsbereich umfasst dabei häufig wenigstens eine Abtastfläche, unter der im Rahmen der Erfindung eine Fläche verstanden wird, auf bzw. in der Punkte bzw. Bereiche auf Gegenständen erfassbar sind.

Ein Beispiel für einen solchen Abstandsbildsensor ist ein Laserscanner, der ein gepulstes Laserstrahlbündel durch seinen Erfassungsbereich schwenkt und winkelaufgelöst von Gegenständen zurückgeworfene Strahlung des Laserstrahlbündels detektiert. Aus der Laufzeit der Laserpulse von deren Abgabe bis zur Detektion von Gegenständen zurückgeworfener Anteile der Laserpulse kann der Abstand ermittelt werden. Das geschwenkte Laserstrahlbündel und der Empfangsbereich, aus dem zurückgeworfene Strahlung durch einen Detektor des Laserscanners empfang- und detektierbar ist, definieren hierbei die Abtastfläche.

Solche Abstandsbildsensoren können vorteilhaft zur Überwachung eines Überwachungsbereichs vor, neben und/oder hinter einem Kraftfahrzeug eingesetzt werden. Um die Lage detektierter Gegenstände relativ zu dem Fahrzeug genau bestimmen zu können, müssen die Lage und Ausrichtung des Abstandsbildsensors und damit auch der Abtastfläche relativ zu dem Fahrzeug genau bekannt sein. Bedingt durch ungenauen Einbau kann der Abstandsbildsensor jedoch gegenüber der Fahrzeuglängs-, -hoch- und/oder -querachse gedreht sein, sodass die Ausrichtung des Abstandsbildsensors zu dem Fahrzeug nicht den Vorgaben entspricht. Um solche Abweichungen durch Justierung oder Maßnahmen bei der Verarbeitung der Daten des Abstandsbildsensors wenigstens teilweise kompensieren zu können, ist es wünschenswert dessen Ausrichtung möglichst genau ermitteln zu können. Entsprechende Probleme können bei der Verwendung von Videosensoren wie beispielsweise Videokameras auftreten.

Der vorliegenden Erfindung liegt daher die Aufgabe zugrunde, ein Verfahren der oben genannten Art bereitzustellen, mittels dessen eine wenigstens teilweise Kalibrierung in Bezug auf die Ausrichtung des Abstandsbildsensors relativ zu dem Fahrzeug mit guter Genauigkeit durchführbar ist.

Die Aufgabe wird gelöst durch ein Verfahren mit den Merkmalen des Anspruchs 1.

Bei dem erfindungsgemäßen Verfahren zur wenigstens teilweisen Kalibrierung eines an einem Fahrzeug gehaltenen Abstandsbildsensors für elektromagnetische Strahlung, mittels dessen ein Erfassungsbereich entlang wenigstens einer Abtastfläche abtastbar und ein entsprechendes Abstandsbild erfassbar ist, in Bezug auf eine Ausrichtung der Abtastfläche oder des Abstandsbildsensors relativ zu dem Fahrzeug werden mittels des Abstandsbildsensors Abstände zwischen dem Abstandsbildsensor und Bereichen auf wenigstens einer Kalibrierfläche ermittelt und unter Verwendung der ermittelten Abstände wird ein Wert für eine die Ausrichtung wenigstens teilweise beschreibende Größe ermittelt.

Wie eingangs erwähnt wird im Rahmen der Erfindung unter einem Abstandsbildsensor für elektromagnetische Strahlung ein Sensor verstanden, mittels dessen Abstandsbilder des Erfassungsbereichs unter Verwendung elektromagnetischer Strahlung erfassbar sind, die Daten in Bezug auf den Abstand von erfassten Gegenstandspunkten zu dem Abstandsbildsensor bzw. einem diesem fest zugeordneten Referenzpunkte enthalten. Beispielsweise können entsprechende Radarsensoren verwendet werden.

Vorzugsweise werden Laserscanner verwendet, die den Erfassungsbereich mit optischer Strahlung, d.h. elektromagnetischer Strahlung im Infrarotbereich, dem sichtbaren Bereich oder dem Ultraviolettbereich des elektromagnetischen Spektrums, abtasten. Insbesondere können Laserscanner verwendet werden, die wenigstens ein gepulstes Laserstrahlbündel durch den Erfassungsbereich bewegen, vorzugsweise schwenken, und von Gegenständen zurückgeworfene Strahlung detektieren. Aus der Pulslaufzeit von dem Abstandsbildsensor zu dem Gegenstand und zurück zu dem Abstandsbildsensor und zurück kann dann der Abstand erfasst werden.

Der Abstandsbildsensor weist wenigstens eine Abtastfläche auf, entlang derer Gegenstände detektierbar sind. Die Abtastfläche kann beispielsweise bei einem Laserscanner durch den abgegebenen Abtaststrahl und gegebenenfalls dessen Bewegung und/oder den Empfangsbereich des Laserscanners für von erfassten Gegenständen zurückgeworfene Strahlung definiert sein. Die Lage der Abtastfläche ist relativ zu dem Abstandsbildsensor durch den Aufbau und/oder gegebenenfalls eine Betriebsart des Abstandsbildsensors festgelegt und vorzugsweise bekannt. Die Abtastfläche braucht keine Ebene zu sein, vorzugsweise ist dies jedoch der Fall.

Zur wenigstens teilweisen Ermittlung der Ausrichtung des Abstandsbildsensors und/oder der Abtastfläche wird erfindungsgemäß wenigstens eine Kalibrierfläche verwendet. Unter Kalibrierfläche wird dabei insbesondere auch ein Flächenabschnitt einer größeren Fläche verstanden, der für die Kalibrierung verwendet wird.

Unter der Ausrichtung des Abstandsbildsensors oder der Abtastfläche wird erfindungsgemäß die Orientierung des Abstandsbildsensors oder der Abtastfläche und die Winkellage wenigstens einer Bezugsachse des Abstandsbildsensors oder einer Bezugsrichtung der Abtastfläche wenigstens näherungsweise entlang der Abtastfläche relativ zu dem Fahrzeug bzw. einem entsprechenden Bezugssystem verstanden. Dabei wird unter der Orientierung der Abtastfläche zu dem Fahrzeug insbesondere auch die Orientierung eines Normalenvektors auf den Abtastfläche an einer vorgegebenen Position relativ zu einer durch die Fahrzeuglängs- und -querachse gegebenen Fahrzeugebene oder einer Aufstandsfläche, auf der das Fahrzeug steht, verstanden. Die Soll-Ausrichtung des Sensors bzw. der Abtastfläche relativ zu dem Sensor kann grundsätzlich beliebig sein, beispielsweise kann diese mit der Aufstandsfläche einen Winkel von 90° bilden, bevorzugt bildet die Abtastfläche in der Soll-Ausrichtung jedoch mit der Aufstandsfläche eine Winkel kleiner als 15°.

Die Ausrichtung des Abstandsbildsensors kann daher mit entsprechenden Größen bzw. Variablen beschrieben werden. Beispielsweise kann wenigstens ein entsprechender Winkel oder Winkelcosinus verwendet werden. Zur vollständigen Beschreibung der Orientierung sind dabei wenigstens zwei Größen notwendig.

Zur wenigstens teilweisen Beschreibung der Orientierung kann ein die Orientierung wenigstens teilweise wiedergebenden Orientierungswinkel, insbesondere einen Nickwinkel, der die Orientierung der Abtastfläche bzw. des Abstandsbildsensors relativ zu der Fahrzeuglängsachse wiedergibt, und/oder einen Wankwinkel, der die Orientierung der Abtastfläche bzw. des Abstandsbildsensors relativ zu der Fahrzeugquerachse wiedergibt, verwendet werden. In Bezug auf die Winkellage kann ein Gierwinkel zwischen einer vorgegebenen Bezugsachse des Abstandsbildsensors wenigstens näherungsweise entlang der Abtastfläche und einer entsprechenden vorgegebenen Bezugsachse des Fahrzeugs parallel zu der Fahrzeuglängs- und/oder -querachse als die Ausrichtung teilweise beschreibende Größe verwendet werden.

Erfindungsgemäß genügt es, dass nur der Wert einer die Ausrichtung wiedergebenden Größe, beispielsweise ein Orientierungswinkel oder ein Gierwinkel, bestimmt wird, vorzugsweise werden jedoch Werte wenigstens zweier die Orientierung wiedergebenden Größen ermittelt. Besonders bevorzugt wird darüber hinaus auch eine die Winkellage wiedergebende Größe ermittelt.

Erfindungsgemäß werden mittels des Abstandsbildsensors Abstände zwischen dem Abstandsbildsensor und Bereichen auf der Kalibrierfläche ermittelt. Unter Verwendung der ermittelten Abstände und gegebenenfalls weiterer Parameter wird dann der Wert der die Ausrichtung wenigstens teilweise wiedergebenden Größe bestimmt.

Durch die Verwendung von Abstandsmessungen, die eine höhere Genauigkeit als Winkelmessungen, beispielsweise bei Laserscannern, aufweisen, kann so eine genaue Kalibrierung erreicht werden.

Weiterbildungen und bevorzugte Ausführungsformen der Erfindung sind in den Ansprüchen, der Beschreibung und den Zeichnungen beschrieben.

Um die Genauigkeit der Kalibrierung zu erhöhen, können vorzugsweise mehrere Abstandsbilder erfasst werden, über die dann gemittelt wird. Insbesondere kann ein zeitliches Mittel gebildet werden. Vorzugsweise werden dazu die bei mehreren Abtastungen erfassten Abstandsbildpunkte derselben Abtastfläche zu einem Gesamtabstandsbild zusammengefasst und gemeinsam ausgewertet.

Um eine möglichst hohe Genauigkeit bei der Kalibrierung auch bei Erfassung nur eines Abstandsbildes oder nur weniger Abstandsbilder zu erhalten, ist es bevorzugt, dass eine Kalibrierfläche mit einer bekannten Form verwendet wird, auf der zur Kalibrierung mittels des Abstandsbildsensors wenigstens zwei entlang der Abtastfläche benachbarte Bereiche ortsaufgelöst erfassbar sind. Auf diese Weise kann die Ausrichtung der Abtastfläche bzw. des Abstandsbildsensors zu der Kalibrierfläche unter Verwendung von wenigstens zwei entsprechenden Abstandsbildpunkten wenigstens eines einzelnen Abstandsbildes genauer bestimmt werden. Insbesondere ist es möglich, Mittelwerte auf der Basis mehrerer erfasster Abstandsbildpunkte eines einzelnen Abstandsbildes zu bilden und damit Fehler der Winkelermittlung bei Laserscannern teilweise zu kompensieren, wodurch die Genauigkeit der Kalibrierung verbessert werden kann.

Weiterhin ist es bevorzugt, dass ein Abstandsbildsensor kalibriert wird, mittels dessen der Erfassungsbereich entlang wenigstens zweier verschiedener Abtastflächen abtastbar ist. Solche Abstandsbildsensoren eignen sich insbesondere für den Fahrzeugbereich, da durch die Verwendung von zwei Abtastflächen trotz Nickbewegungen des Fahrzeugs in der Regel wenigstens ein einer Abtastfläche entsprechendes Abstandsbild verfügbar ist. Ein Laserscanner mit wenigstens zwei Abtastflächen ist beispielsweise in der deutschen Patentanmeldung mit dem amtlichen Aktenzeichen 10143060.4 beschrieben, deren Inhalt hiermit durch Bezugnahme in die Beschreibung aufgenommen wird.

Insbesondere in diesem Fall ist es dann bevorzugt, dass ein Abstandsbildsensor kalibriert wird, für den die Lage und/oder Ausrichtung der Abtastfläche relativ zu einem Koordinatensystem des Abstandsbildsensors bekannt ist, dass für Abstandsbildpunkte des erfassten Abstandsbildes, die der Abtastfläche zugeordnet sind, Koordinaten in dem Koordinatensystem des Abstandsbildsensors ermittelt werden, und dass diese Koordinaten zur wenigstens teilweisen Ermittlung der Ausrichtung verwendet werden. Dieses Vorgehen ist besonders vorteilhaft bei Abstandsbildsensoren, bei denen keine entsprechende Korrektur vorgesehen ist, sondern die Koordinaten in dem Koordinatensystem des Abstandsbildsensors nur näherungsweise ermittelt werden. Zur Durchführung kann insbesondere eine Lage in der Abtastfläche erfasst werden, die dann mittels einer bekannten Funktion in entsprechende Koordinaten in dem Koordinatensystem umgerechnet werden kann. Diese Weiterbildung ist beispielsweise bei Abstandsbildsensoren mit mehreren wenigstens abschnittsweise gegeneinander geneigten Abtastflächen vorteilhaft, da hier andernfalls Ungenauigkeiten durch die Relativneigung der Abtastflächen zueinander entstehen können.

Nach einer ersten Alternative ist es bei Verwendung eines Abstandsbildsensors mit wenigstens zwei Abtastflächen bevorzugt, dass in den beiden Abtastflächen jeweils erfasste Bereiche gemeinsam zur wenigstens teilweisen Ermittlung der Ausrichtung verwendet werden. Hierdurch kann eine besonders einfache Verarbeitung der Daten erfolgen.

Nach einer zweiten Alternative ist es bevorzugt, dass aus den Abständen von erfassten Bereichen auf der Kalibrierfläche zu dem Abstandsbildsensor für jede der Abtastflächen ein der jeweiligen Abtastfläche zugeordneter Wert für die die Ausrichtung wenigstens teilweise wiedergebende Größe ermittelt wird, und dass aus den den Abtastflächen zugeordneten Werten ein Wert für die die Ausrichtung des Abstandsbildsensors wenigstens teilweise wiedergebende Größe ermittelt wird. Mit anderen Worten werden wenigstens teilweise die Ausrichtungen der Abstandsflächen unabhängig voneinander ermittelt und aus diesen die Ausrichtung des Abstandsbildsensors selbst bzw. eines Koordinatensystems des Abstandsbildsensors bestimmt. Hiermit ist eine große Genauigkeit erzielbar.

Um eine besonders einfache Kalibrierung zu ermöglichen, ist es bevorzugt, dass die Kalibrierfläche eben ist. In diesem Fall haben Ungenauigkeiten der Lage der Kalibrierflächen relativ zu dem Abstandsbildsensor bei der Kalibrierung einen nur relativ geringen Einfluss.

Zur Ermittlung der Orientierung der Abtastfläche, die beispielsweise durch die Orientierung eines Normalenvektors auf die Abtastfläche an einem vorgegebenen Ort auf der Abtastfläche gegeben sein kann, ist es bevorzugt, dass zur wenigstens teilweisen Bestimmung einer Orientierung der Abtastfläche oder des Abstandsbildsensors relativ zu dem Fahrzeug, insbesondere eines Nickwinkels, die Bereiche der Kalibrierfläche jeweils relativ zu der Fahrzeuglängs- oder -hochachse in vorgegebener Weise geneigt sind, und dass aus den erfassten Abständen der von dem Abstandsbildsensor erfassten Bereiche in Abhängigkeit von deren Neigungen ein Wert für eine die Orientierung wenigstens teilweise wiedergebende Größe, insbesondere den Nickwinkel, ermittelt wird. Grundsätzlich kann sich die Ausrichtung der Kalibrierfläche nach der Soll-Lage der Abtastfläche in Bezug auf das Fahrzeug richten. Sie bildet mit dieser vorzugsweise einen Winkel von weniger als 90°. Insbesondere kann die Kalibrierfläche gegenüber einer ebenen Aufstandsfläche, auf der das Fahrzeug bei der Erfassung des Abstandsbildes bzw. bei der Kalibrierung steht, geneigt sein, nicht aber orthogonal zu dieser verlaufen. Auf diese Weise kann der Abstand des Schnitts der Abtastfläche mit der Kalibrierfläche von der Aufstandsfläche bzw. einer entsprechenden Ebene eines Fahrzeugkoordinatensystems oder eine Neigung der Abtastfläche im Bereich der Kalibrierfläche relativ zu der Aufstandsfläche bzw. der entsprechenden Ebene des Fahrzeugkoordinatensystems allein durch Abstandsmessungen ermittelt werden, die beispielsweise bei Laserscannern eine verglichen mit Winkelmessungen hohe Genauigkeit aufweisen. Die Ermittlung braucht dabei nicht auf der Basis nur eines entsprechenden Abstandsbildpunktes zu erfolgen, vielmehr können aus erfassten Abstandbildpunkten auch Bezugspunkte ermittelt werden, die dann zur eigentlichen Höhen- bzw. Neigungsermittlung herangezogen werden.

Zur wenigstens teilweisen Ermittlung der Orientierung der Abtastfläche oder des Abstandsbildsensors ist es dann besonders bevorzugt, dass aus wenigstens zwei erfassten Abständen der Bereiche der Kalibrierfläche ein Abstand der Kalibrierfläche im Bereich der Abtastfläche von dem Abstandsbildsensor ermittelt wird, und dass ein Wert für eine die Orientierung der Abtastfläche oder des Abstandsbildsensors wenigstens teilweise wiedergebenden Größe, insbesondere den Nickwinkel, unter Verwendung des ermittelten Abstandes der Kalibrierfläche ermittelt wird. Insbesondere kann auf diese Weise ein Ausgleich von Messfehlern erfolgen, der die Genauigkeit der Kalibrierung erhöht.

Wird nur eine Kalibrierfläche in einem vorgegebenen Bereich der Abtastfläche verwendet, muss deren Abstand zu dem Abstandsbildsensor bekannt sein.

Wird ein Abstandsbildsensor mit wenigstens zwei Abtastflächen verwendet, ist es bevorzugt, dass aus dergleichen Kalibrierfläche entsprechenden Abstandsbildpunkten verschiedener Abtastflächen eine Lage eines Schnitts der Abtastfläche mit der Kalibrierfläche in einer Richtung orthogonal zu einer Aufstandsfläche des Fahrzeugs oder eine Neigung wenigstens einer der Abtastflächen zu der Aufstandsfläche in einer Richtung von dem Abstandsbildsensor zu der Kalibrierfläche ermittelt wird. Der Abstand der Kalibrierfläche von dem Abstandsbildsensor braucht dann nicht bekannt zu sein.

Alternativ ist es bevorzugt, dass zur wenigstens teilweisen Bestimmung der Orientierung, insbesondere des Nickwinkels, zwei in vorgegebener Lage zueinander benachbart angeordnete Kalibrierflächen verwendet werden, deren zur Kalibrierung verwendete Bereiche in unterschiedlicher, vorgegebener Weise relativ zu der Fahrzeuglängs- oder -hochachse geneigt sind, dass mittels des Abstandsbildsensors Abstände zwischen dem Abstandsbildsensor und Bereichen auf den Kalibrierflächen nahe der Abtastfläche ermittelt werden, und dass zur Ermittlung eines Wertes für eine die Orientierung der Abtastfläche oder des Abstandsbildsensors wenigstens teilweise wiedergebenden Größe, insbesondere des Nickwinkels, Unterschiede der ermittelten Abstände verwendet werden. Darunter, dass die Kalibrierflächen benachbart sind, wird insbesondere verstanden, dass diese so nahe beieinander angeordnet sind, dass eine Neigung der Abtastfläche in Richtung eines von dem Abstandsbildsensor ausgehenden Strahls in der Abtastfläche ermittelbar ist. Als Unterschiede können insbesondere Differenzen verwendet werden. Die Kalibrierflächen können dabei physisch getrennt sein oder miteinander verbunden bzw. gegebenenfalls einstückig ausgebildet sein. Die Neigungen der Kalibrierflächen sind dabei nicht gleich, vorzugsweise sind sie in entgegengesetzten Richtungen geneigt.

Um die Orientierung vollständig bestimmen zu können, ist es bevorzugt, dass zur Ermittlung der Orientierung wenigstens zwei in einer Richtung quer zu einer Strahlrichtung des Abstandsbildsensors voneinander beabstandete Kalibrierflächen verwendet werden, auf denen Bereiche jeweils relativ zu der Fahrzeuglängs- oder -hochachse in vorgegebener Weise geneigt sind.

Dabei ist es besonders bevorzugt, dass ein Winkel zwischen Verbindungslinien zwischen den Kalibrierflächen und dem Abstandsbildsensor zwischen 5° und 175° liegt. Auf diese Weise ist eine genaue Bestimmung der Orientierung in Richtungen näherungsweise quer zu einem Mittelstrahl der Abtastfläche möglich.

Grundsätzlich kann ein Wert einer der die Orientierung des Abstandsbildsensors oder der Abtastfläche wenigstens teilweise beschreibenden Größe vorgegeben sein und der andere Wert mit dem erfindungsgemäßen Verfahren bestimmt werden. Es ist jedoch bevorzugt, dass die Werte der die Orientierung beschreibenden Größen in Abhängigkeit voneinander ermittelt werden. Damit ist auf einfache Weise eine vollständige Kalibrierung in Bezug auf die Orientierung möglich.

Um einen Winkel zwischen der Fahrzeuglängsachse und einer Bezugsrichtung in der Abtastfläche oder einer Bezugsrichtung des Abstandsbildsensors bei Drehung wenigstens näherungsweise um die Fahrzeughochachse oder eine Normale auf die Abtastfläche in der Ebene des Fahrzeugs oder der Abtastebene ermitteln zu können, ist es bevorzugt, dass zur Ermittlung einer Drehung einer Bezugsrichtung in der Abtastfläche oder einer Bezugsrichtung des Abstandsbildsensors wenigstens näherungsweise um die Fahrzeughochachse oder eine Normale auf die Abtastfläche wenigstens eine Kalibrierfläche verwendet wird, deren Form und Ausrichtung relativ zu einer Bezugsrichtung des Fahrzeugs vorgegeben ist, dass die Lagen von wenigstens zwei Bereichen auf der Kalibrierfläche mittels des Abstandsbildsensors erfasst werden, und dass in Abhängigkeit von den ermittelten Lagen ein Wert einer einen Winkel der Drehung wiedergebenden Größe, insbesondere eines Gierwinkels, ermittelt wird. Auf diese Weise wird zur Bestimmung des Winkels bzw. der Größe nicht allein eine Winkelmessung herangezogen, sondern es werden auch Abstandsmessungen benutzt, was die Genauigkeit wesentlich erhöht. Vorzugsweise ist die Kalibrierfläche orthogonal zu der Aufstandsfläche des Fahrzeugs ausgerichtet.

Um die Genauigkeit der Kalibrierung zu erhöhen ist es besonders bevorzugt, dass zwei Kalibrierflächen verwendet werden, deren Form vorgegeben ist und die in einer Ebene parallel zu einer Aufstandsfläche, auf der das Fahrzeug steht, relativ zueinander geneigt sind, wobei die Ausrichtung wenigstens einer der Kalibrierflächen relativ zu einer Bezugsrichtung des Fahrzeugs vorgegeben ist, dass die Lagen von jeweils wenigstens zwei Bereichen auf jeder der Kalibrierflächen mittels des Abstandsbildsensors erfasst werden, und dass in Abhängigkeit von den Lagen der Wert der Größe ermittelt wird. Die Neigung der Kalibrierflächen zueinander braucht dabei nicht für alle Abschnitte der Kalibrierfläche gleich zu sein. Auch hier ist es bevorzugt, dass die Kalibrierflächen orthogonal zu der Aufstandsfläche ausgerichtet sind.

Nach den vorstehenden Verfahrensalternativen kann der Winkel bzw. Gierwinkel auch dadurch ermittelt werden, dass die Richtung der Kalibrierflächen parallel zu der Aufstandsfläche mit der der Fahrzeuglängsachse verglichen wird. Es ist jedoch bevorzugt, dass zwei Kalibrierflächen verwendet werden, deren Form und deren Lage zueinander und wenigstens teilweise zu dem Fahrzeug vorgegeben ist und die in den Abschnitten in Richtung einer Aufstandsfläche, auf der das Fahrzeug steht, relativ zueinander geneigt sind, dass mittels des Abstandsbildsensors auf jeder der Kalibrierflächen wenigstens zwei Abstandsbildpunkte erfasst werden, und auf der Basis der erfassten Lagen der Abstandsbildpunkte, der Form der Kalibrierflächen und der relativen Lagen der Kalibrierflächen zueinander und zu dem Fahrzeug die Lage eines durch die Kalibrierflächen gegebenen Referenzpunkts ermittelt und mit einer vorgegebenen Soll-Lage in Beziehung wird. Auf diese Weise kann die Genauigkeit der Kalibrierung weiter erhöht werden. Die erfasste Lage kann mit der Soll-Lage beispielsweise in Beziehung gesetzt werden, indem eine Formel benutzt wird, deren Anwendbarkeit die Soll-Lage voraussetzt.

Dazu ist es besonders bevorzugt, dass mittels der erfassten Abstandsbildpunkte Konturlinien auf den Kalibrierflächen ermittelt werden, und dass aus den Konturlinien die Lage des Referenzpunktes ermittelt wird. Auf diese Weise können Messfehler einfach ausgeglichen werden.

Um eine einfache Auswertung der Abstandsbilder zuzulassen, ist es bevorzugt, dass die Kalibierflächen eben sind, und dass der Referenzpunkt auf einer Schnittlinie der durch die Kalibrierflächen gegebenen Ebenen liegt.

Vorzugsweise wird zur Kalibrierung das Fahrzeug mit seiner Längsachse so ausgerichtet, dass der Referenzpunkt wenigstens näherungsweise auf einer Verlängerung der Fahrzeuglängsachse liegt.

Sollen nur möglichst wenige Kalibierflächen verwendet werden, werden diese vorzugsweise so ausgebildet und angeordnet, dass diese gleichzeitig die Ermittlung der Orientierung und des Gierwinkels ermöglichen.

Häufig ist es sinnvoll, an einem Fahrzeug sowohl einen Abstandsbildsensor als auch eine Videokamera vorzusehen, um den Bereich vor und/oder neben und/oder hinter dem Fahrzeug besser überwachen zu können. Um die Daten der Videokamera nutzen zu können, ist auch für diese eine Kalibrierung notwendig. Es ist daher bevorzugt, dass eine Videokamera zur Erfassung von Videobildern wenigstens eines Teils des Erfassungsbereichs des Abstandsbildsensors wenigstens teilweise in Bezug auf eine Ausrichtung relativ zu dem Abstandsbildsensor und/oder dem Fahrzeug kalibriert wird, indem die Lage einer Fläche für die Videokalibrierung mittels des Abstandsbildsensors unter Berücksichtigung der Kalibrierung des Abstandsbildsensors ermittelt wird, die Lage eines Kalibriermerkmals auf der Fläche für die Videokalibrierung mittels der Videokamera erfasst wird, und aus der Lage des Kalibriermerkmals in dem Videobild und der Lage der Fläche für die Videokalibrierung der Wert einer die Ausrichtung wenigstens teilweise wiedergebenden Größe ermittelt wird. Auf diese Weise braucht das Fahrzeug nicht in einer genau vorgegebenen Lage zu der zur Kalibrierung verwendeten Fläche angeordnet zu sein. Diese wird vielmehr mit dem Abstandsbildsensor ermittelt, was nach einer Kalibrierung, die grundsätzlich in beliebiger Weise erfolgen kann, mit hoher Genauigkeit erfolgen kann. Als Kalibriermerkmal kann ein beliebiges vorgegebenes Merkmal verwendet werden, das in einem Videobild extrahiert werden kann. In Bezug auf die Ausrichtung der Videokamera gelten die gleichen allgemeinen Bemerkungen wie zu der Ausrichtung des Abstandssensors. Insbesondere können entsprechenden Winkel zur Beschreibung verwendet werden.

Um einen Vergleich der Lage des Kalibriermerkmals in dem Videobild mit der mittels des Abstandsbildsensors erfassten Lage zu ermöglichen, ist es bevorzugt, dass in Abhängigkeit von mittels des Abstandsbildsensors erfassten Lagekoordinaten des Kalibriermerkmals mittels einer Vorschrift zur Abbildung von Strahlen im dreidimensionalen Raum auf eine Sensorfläche der Videokamera, vorzugsweise mittels eines Kameramodells, eine Lage des Kalibriermerkmals in dem Bild ermittelt wird. Auf diese Weise kann eine oft nur unvollständig durchführbare Ermittlung einer Lage des Kalibriermerkmals im Raum aus dem Videobild vermieden werden. Die die Abbildung mittels der Videokamera wiedergebende Abbildungsvorschrift kann beispielsweise durch eine Nachschlagetabelle gegeben sein. Als Kameramodelle können beliebige für die jeweilige Videokamera geeignete Modelle verwendet werden, beispielsweise Lochkamera-Modelle. Für Videokameras mit einem großen Blickwinkel können andere Modelle verwendet. Ein Modell für eine omnidirektionale Kamera ist beispielsweise beschrieben in den Veröffentlichung von Micusik, B. und Pajdla T.: "Estimation of Omnidirectional Camera Model from Epipolar Geometry", Conference on Computer Vision and Pattern Recognition (CVPR), Madison, USA, 2003 und "Omnidirectional Camera Model and Epipolar Geometry Estimation by RANSAC with Bucketing", Scandinavian Conference on Image Analysis (SCIA), Göteborg, Sweden, 2003.

Um eine besonders genaue Ermittlung der Lage der Fläche mit dem Kalibriermerkmal zu erhalten, ist es bevorzugt, dass die Fläche zur Videokalibrierung in bekannter Lage zu den Kalibrierflächen zur Ermittlung zur Ermittlung einer Drehung einer Bezugsrichtung in der Abtastfläche oder einer Bezugsrichtung des Abstandsbildsensors wenigstens näherungsweise um die Fahrzeughochachse oder eine Normale auf die Abtastfläche angeordnet und insbesondere mit diesen verbunden ist.

Um eine besonders einfache Anordnung Kalibrierung zu erhalten, ist es bevorzugt, dass das Kalibriermerkmal auf einer der Kalibrierflächen gebildet ist.

Das Kameramodell verwendet Parameter, die meist noch bestimmt werden müssen. Gemäß einer ersten Alternative ist es daher bevorzugt, dass interne Parameter eines Kameramodells der Videokamera vor der Kalibrierung der Videokamera in Bezug auf die Ausrichtung ermittelt werden. Hierzu können grundsätzlich bekannte Verfahren, beispielsweise unter Verwendung von Schachbrettmustern in vorgegebener Lage zu der Videokamera verwendet werden. Nach einer zweiten Alternative ist es bevorzugt, dass mittels des Kalibriermerkmals interne Parameter eines Kameramodells der Videokamera ermittelt werden. Dazu kann es notwendig sein, mehrere Kalibriermerkmale zu verwenden.

Die Erfindung wird im Folgenden noch näher anhand der Zeichnungen beispielhaft erläutert. Es zeigen:

Fig. 1       eine schematische Draufsicht auf ein Fahrzeug mit einem Abstandsbildsensor und einer Videokamera und vor bzw. neben dem Fahrzeug befindlichen Kalibrierobjekten,

Fig. 2       eine schematische, teilweise Seitenansicht des Fahrzeugs und eines der Kalibrierobjekte in Fig. 1,

Fig. 3       eine schematische perspektivische Ansicht eines ersten Kalibrierobjekts mit ersten Kalibrierflächen,

Fig. 4       eine schematische perspektivische Ansicht eines zweiten Kalibrierobjekts mit zweiten Kalibrierflächen und einer dritten Kalibrierfläche,

Fig. 5A und 5B       eine schematische Seitenansicht bzw. Draufsicht auf das Fahrzeug in Fig. 1 mit bei einem Verfahren nach einer bevorzugten Ausführungsform der Erfindung verwendeten Koordinatensystemen,

Fig. 6       eine schematische Darstellung eines Fahrzeugkoordinatensystems und eines Laserscannerkoordinatensystems zur Veranschaulichung von die Ausrichtung des Laserscanners relativ zu dem Fahrzeug beschreibenden Winkeln,

Fig. 7       eine schematische perspektivische Darstellung zur Erläuterung eines Kameramodells für die Videokamera in Fig. 1,

Fig. 8       einen Ausschnitt aus einem Abstandsbild mit Bildpunkten, die ersten Kalibrierflächen entsprechen, und von bei dem Verfahren verwendeten Konturlinien bzw. Hilfsgeraden,

Fig. 9          eine schematische Seitenansicht eines ersten Kalibrierobjekts zur Erläuterung der Ermittlung der Neigung einer Abtastfläche des Abstandsbildsensors in Fig. 1 entlang einer vorgegebenen Richtung in der Abtastfläche,

Fig. 10         eine schematische Darstellung eines bei dem Verfahren nach der bevorzugten Ausführungsform der Erfindung zur Bestimmung des Gierwinkels verwendeten Zwischenkoordinatensystems und des Fahrzeugkoordinatensystems,

Fig. 11         einen Ausschnitt aus einem Abstandsbild mit Bildpunkten, die zweiten Kalibrierflächen entsprechen, und von bei dem Verfahren verwendeten Konturlinien bzw. Hilfsgeraden,

Fig. 12         eine perspektivische Ansicht von zweiten Kalibrierflächen mit Kalibriermerkmalen zur Verwendung bei einem Verfahren nach einer weiteren Ausführungsform des erfindungsgemäßen Verfahrens,

Fig. 13         eine Draufsicht auf die zweiten Kalibrierflächen in Fig. 12 mit einem Fahrzeug, und

Fig. 14         eine Seitenansicht einer ersten Kalibrierfläche für ein Verfahren nach einer dritten bevorzugten Ausführungsform der Erfindung entsprechend Fig. 9.

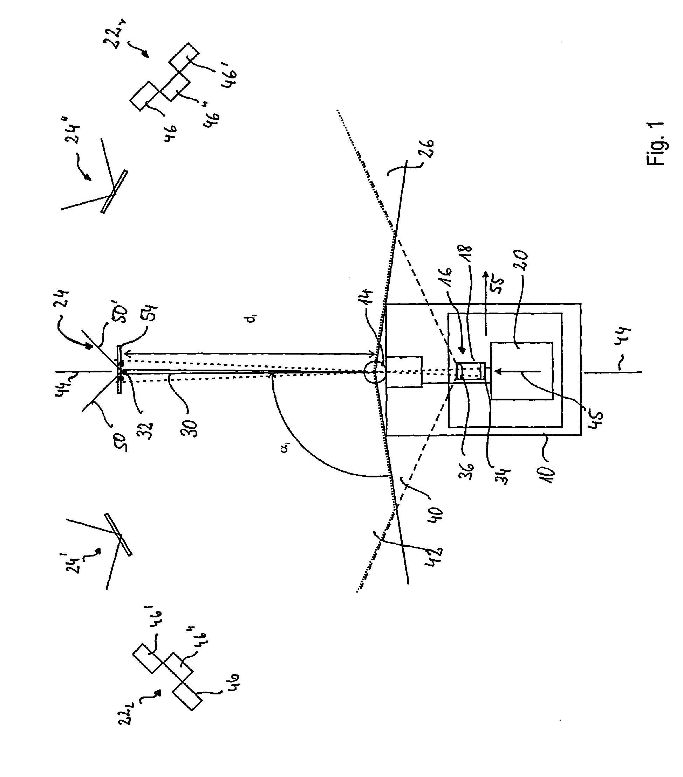

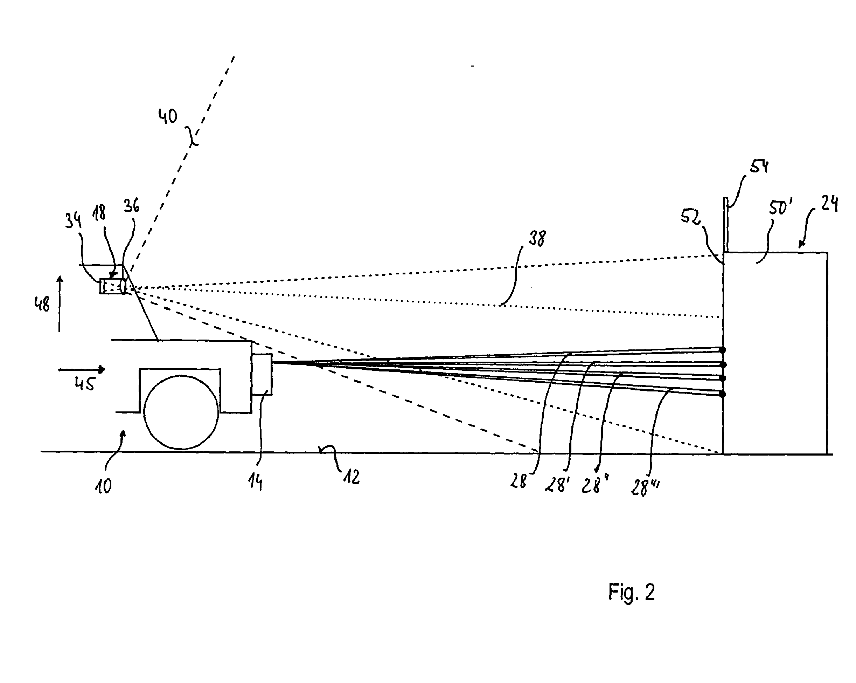

In den Fig. 1 und 2 trägt ein Fahrzeug 10, das auf einer Aufstandsfläche 12 steht, zur Überwachung des Bereichs vor dem Fahrzeug 10 an seiner Frontseite einen an dem Fahrzeug 10 gehaltenen Abstandsbildsensor 14, im Beispiel ein Laserscanner, und ein an dem Fahrzeug 10 gehaltenes Videosystem 16 mit einer monokularen Videokamera 18. In dem Fahrzeug 10 befindet sich weiterhin eine mit dem Laserscanner 14 und dem Videosystem 16 verbundene Datenverarbeitungseinrichtung 20. In Fahrtrichtung vor und neben dem Fahrzeug 10 befinden sich erste Kalibrierobjekte $22_1$ und $22_r$ sowie zweite Kalibrierobjekte 24, 24' und 24''.

Der Laserscanner 14 weist einen in Fig. 1 nur teilweise gezeigten Erfassungsbereich 26 auf, der einen Winkel von etwas mehr als 180° abdeckt. Der Erfassungsbereich 26 ist in Fig. 1 nur schematisch und zur besseren Darstellung insbesondere in radialer Richtung zu klein dargestellt. Der Erfassungsbereich umfasst, in Fig. 2 nur schematisch gezeigt, vier fächerartig angeordnete Abtastflächen 28, 28', 28'' und 28''', die relativ zueinander und zu dem Laserscanner 14 eine vorgegebene, bekannte Lage einnehmen. Ein entsprechender Laserscanner ist beispielsweise in der oben genannten deutschen Patentanmeldung offenbart. Die Kalibrierobjekte $22_1$ und $22_r$ sowie 24, 24' und 24'' befinden sich in dem Erfassungsbereich 26.

Der Laserscanner 14 tastet seinen Erfassungsbereich 26 in grundsätzlich bekannter Weise mit einem mit konstanter Winkelgeschwindigkeit geschwenkten, gepulsten Laserstrahlbündel 30 mit einem im Wesentlichen rechteckigen, bei einer Schwenklage in der Mitte des Erfassungsbereichs 26 senkrecht zu der Aufstandsfläche 12 länglichen Querschnitt ab. Abgestimmt auf die Schwenkbewegung des Laserstrahlbündels 30, wird umlaufend in konstanten Zeitabständen $\Delta t$ zu Zeiten $\tau_i$ in festen Winkelbereichen um einen mittleren Winkel $\alpha_i$ detektiert, ob das Laserstrahlbündel 30 von einem Punkt 32 bzw. Bereich eines Gegenstands, beispielsweise eines der Kalibrierobjekte $22_1$ und $22_r$ sowie 24, 24' und 24'', reflektiert wird. Der Index i läuft dabei von 1 bis zur Anzahl der Winkelbereiche im Erfassungsbereich 26. Von diesen Winkelbereichen ist in Fig. 1 nur ein Winkelbereich gezeigt, der dem mittleren Winkel $\alpha_i$ zugeordnet ist. Hierbei ist der Winkelbereich zur deutlicheren Darstellung übertrieben groß gezeigt. Das von Gegenständen zurückgeworfene Licht wird dabei durch vier entsprechend ausgerichtete Detektoren empfangen, deren Empfangsbereich entsprechend mitgeschwenkt wird. Damit ergibt sich im Ergebnis eine Abtastung in den vier Abtastflächen 28, 28', 28'' und 28'''. Bei einem Schnitt entlang des Laserstrahlbündels 30 sind die Abtastebenenschnitte zueinander in kleinen bekannten Winkeln geneigt, deren Größe von dem Schwenkwinkel abhängt und bekannt ist. Der Erfassungsbereich 26 umfasst daher, wie in Fig. 2 erkennbar, vier bis auf die Aufweitung des Laserstrahlbündels 30 zweidimensionale Abtastflächen 28, 28', 28'' und 28'''.

Anhand der Laufzeit des Laserstrahlpulses wird der Abstandsbildsensorabstand dij des Gegenstandspunktes i, im Beispiel in Fig. 1 des Gegenstandspunktes 32, in der Abtastfläche j von dem Laserscanner 14 ermittelt. Der Laserscanner 14 erfasst daher als Koordinaten in einem dem Gegenstandspunkt 32 des Gegenstands entsprechenden Abstandsbildpunkt neben der Abtastfläche j den Winkel $\alpha_i$ und den bei diesem Winkel festgestellten Abstand dij, das heißt die Position des Gegenstandspunkts 32 in Polarkoordinaten. Jedem Abstandsbildpunkt ist somit ein Gegenstandspunkt zugeordnet.

Die Menge der bei einer Abtastung erfassten Abstandsbildpunkte bildet ein Abstandsbild im Sinne der vorliegenden Anmeldung.

Der Laserscanner 14 tastet den ersten Erfassungsbereich 26 jeweils in aufeinander folgenden Abtastungen ab, so dass eine zeitliche Folge von Abtastungen und entsprechenden Abstandsbildern entsteht.

Die monokulare Videokamera 18 des Videosystems 16 ist eine im Beispiel im Bereich des Rückspiegels hinter der Windschutzscheibe des Fahrzeugs 10 gehaltene, konventionelle Schwarz-Weiß-Videokamera mit einem CCD-Flächensensor 34 und einem Abbildungssystem, das in den Fig. 1 und 2 schematisch als einfache Linse 36 dargestellt ist, tatsächlich aber aus einem Linsensystem besteht, und aus einem Videoerfassungsbereich 40 des Videosystems einfallendes Licht auf den CCD-Flächensensor 34 abbildet. Eine optische Achse 38 der Videokamera 18 ist auf die Abtastflächen 28, 28', 28", 28''' des Laserscanners 14 zu in einem geringen, in Fig. 2 übertrieben groß gezeigten Winkel geneigt.

Der CCD-Flächensensor 34 weist in einer Matrix angeordnete Photodetektionselemente auf. Signale der Photodetektionselemente werden ausgelesen, wobei Videobilder mit Videobildpunkten gebildet werden, die zunächst die Positionen der Photodetektionselemente in der Matrix oder eine andere Kennung für die Photodetektionselemente und jeweils einen der Intensität des von dem entsprechenden Photodetektionselement empfangenen Lichts entsprechenden Intensitätswert enthalten. Die Videobilder werden in diesem Ausführungsbeispiel mit der gleichen Rate erfasst, mit der von dem Laserscanner 14 Abstandsbilder erfasst werden.

Von einem Gegenstand, beispielsweise dem Kalibrierobjekt 24, ausgehendes Licht wird durch das Abbildungssystem 36 auf den CCD-Flächensensor 34 abgebildet. Dies ist in den Fig. 1 und 2 für die Umrisse des Gegenstands, beispielsweise des Kalibrierobjekts 24, durch die kurzgestrichelten Linien schematisch angedeutet.

Aus dem Abstand von CCD-Flächensensor 34 und Abbildungssystem 36 sowie aus der Lage und den Abbildungseigenschaften des Abbildungssystem 36, beispielsweise dessen Brennweite, kann aus der Lage eines Gegenstandspunktes, z. B. des Gegenstandspunktes 32 auf dem Kalibrierobjekt, mittels eines Kameramodells für die Videokamera 18 berechnet werden, auf welchen Ort des CCD-Flächensensors 34 der matrixförmig angeordneten Photodetektionselemente der Gegenstandspunkt 32 abgebildet wird.

Ein Überwachungsbereich 42 ist in Fig. 1 schematisch durch eine gepunktete Linie näherungsweise dargestellt und durch den Schnitt der Erfassungsbereiche 26 des Laserscanners 14 bzw. 40 des Videosystems 16 gegeben.

Zur Verarbeitung der Bilder des Laserscanners 14 und des Videosystems 16 ist die Datenverarbeitungseinrichtung 20 vorgesehen, die dazu mit dem Laserscanner 14 und dem Videosystem 16 verbunden ist. Die Datenverarbeitungseinrichtung 20 weist unter anderem einen zur Auswertung der erfassten Abstands- und Videobilder programmierten digitalen Signalprozessor und eine mit dem digitalen Signalprozessor verbundene Speichereinrichtung auf. Bei einer anderen Ausführungsform kann die Datenverarbeitungseinrichtung auch einen konventionellen Prozessor aufweisen, mit dem ein in der Datenverarbeitungseinrichtung gespeichertes Computerprogramm zur Auswertung der erfassten Bilder ausgeführt wird.

Die ersten Kalibrierobjekte $22_l$ und $22_r$ sowie die zweiten Kalibrierobjekte 24, 24' und 24" sind in Bezug auf eine Referenzlinie 44 spiegelsymmetrisch angeordnet, wobei das mittlere der Kalibrierungsobjekte 24 auf der Referenzlinie 44 angeordnet ist. Das Fahrzeug 10 ist mit seiner Längsachse 45 parallel zu und insbesondere über der Referenzlinie 44 angeordnet.

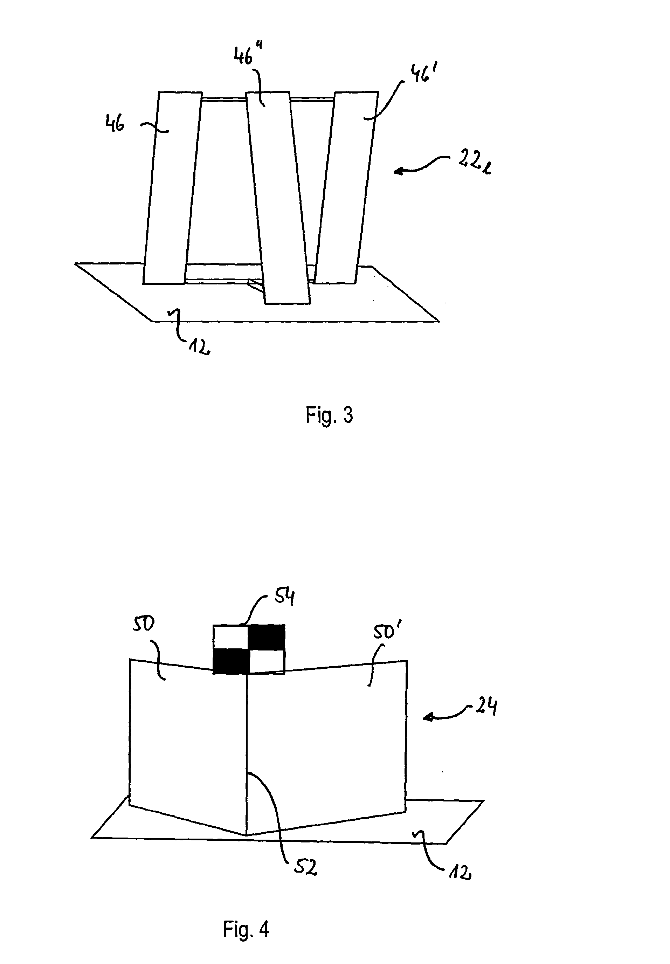

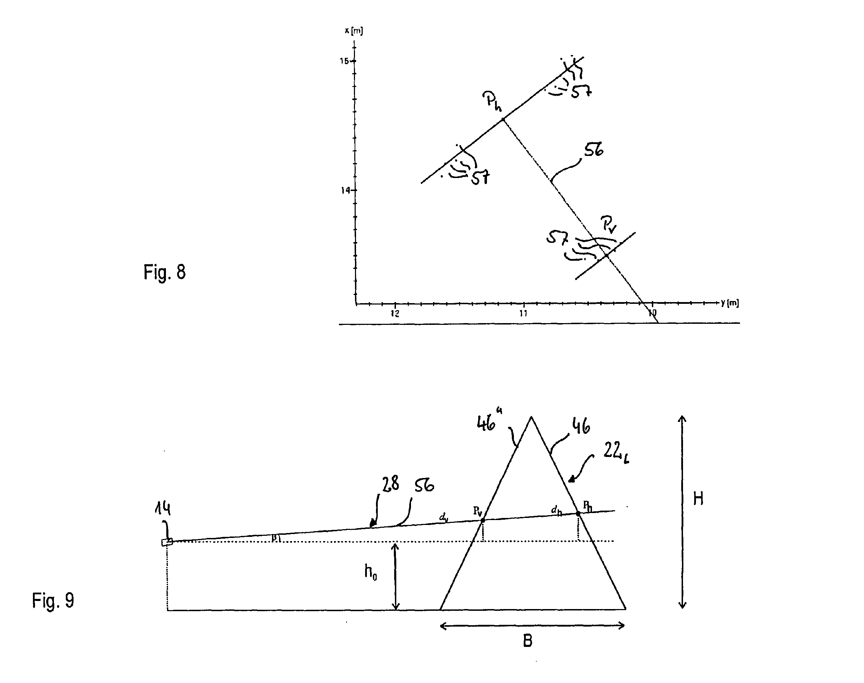

Wie in Fig. 1 und 3 veranschaulicht umfassen die gleich ausgebildeten ersten Kalibrierobjekte $22_l$ und $22_r$, die relativ zu dem Laserscanner 14 und der Referenzlinie 44 in einem Winkel von im Beispiel etwa 45° links und rechts der Referenzlinie 44 angeordnet sind, drei ebene, gleich dimensionierte erste Kalibrierflächen 46, 46' und 46", die gegenüber der Aufstandsfläche 12 in vorgegebenen Winkeln, im Beispiel von etwa 30° bzw. -30°, geneigt sind. Dabei sind die ersten Kalibrierflächen 46 und 46" parallel zueinander angeordnet, während die erste Kalibrierfläche 46' mit einer Normalen auf die Aufstandsfläche 12 bzw. die Fahrzeughochachse 48 den bis auf das Vorzeichen gleichen Winkel einschließt wie die ersten Kalibrierflächen 46 und 46", sodass sich in der Seitenansicht eine Form ergibt, die einem Giebeldach bzw. einem gleichschenkligen Dreieck ähnelt (vgl. Fig. 9). Die Höhe H des Dreiecks und der Abstand B der ersten Kalibrierflächen 46, 46' und 46" auf der Aufstandsfläche 12 in Richtung der Neigung der ersten Kalibrierflächen sind bekannt. Die ersten Kalibrierflächen 46, 46' und 46" sind so zueinander benachbart angeordnet, sodass bei Erfassung mit dem Laserscanner 14 aufeinander folgende Abstandsbildpunkte lückenlos auf dem Kalibrierobjekt, d.h. auf einer der ersten Kalibrierflächen 46, 46' und 46" liegen, jedoch keine davor oder dahinter.

Die ebenfalls gleich ausgebildeten zweiten Kalibrierobjekte 24, 24' und 24" umfassen jeweils zwei zweite ebene, orthogonal zu der Aufstandsfläche 12 und damit parallel zu der Fahrzeughochachse 48 ausgerichtete sowie zueinander geneigte Kalibrierflächen 50 und 50', die sich an einer Kante 52 schneiden bzw. berühren (vgl. Fig. 1 und 4).

Auf den Kalibrierobjekten 24, 24' und 24" ist jeweils über der Kante 52 orthogonal zu der Aufstandsfläche 12 eine dritte, ebene, symmetrisch zu den zweiten Kalibrierflächen 50 und 50' ausgerichtete Kalibrierfläche 54 mit einem bekannten Kalibriermerkmal, im Beispiel schachbrettartigen, Muster angeordnet, dessen Mittelpunkt auf der Verlängerung der Kante 52 in einer bekannten Höhe orthogonal zu der Aufstandsfläche 12 liegt.

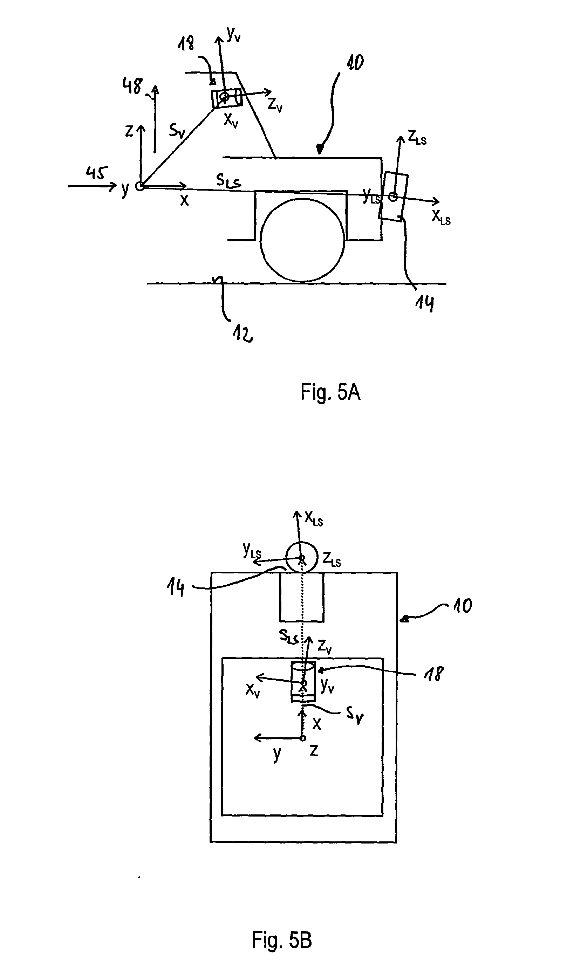

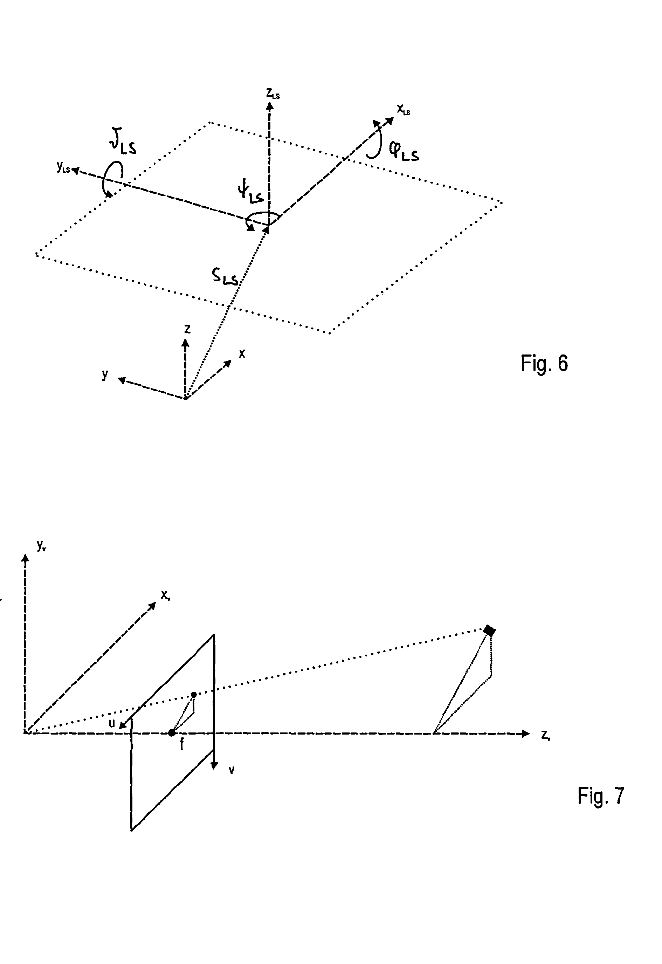

Bei dem im Folgenden beschriebenen Kalibrierverfahren nach einer bevorzugten Ausführungsform der Erfindung werden mehrere Koordinatensysteme benutzt (vgl. Fig. 5A, 5B und 6).

Dem Laserscanner 14 ist ein mit diesem verbundenes kartesisches Laserscannerkoordinatensystem mit Achsen $x_{LS}$, $y_{LS}$, $z_{LS}$ zugeordnet, in dem die Koordinaten der Abstandsbildpunkte angegeben werden. Die Koordinaten von Gegenständen können weiterhin in einem fest der Videokamera 18 zugeordneten, kartesischen Kamerakoordinatensystem mit Achsen xv, yv und zv angegeben werden. Schließlich ist ein kartesisches Fahrzeugkoordinatensystem vorgesehen, dessen x-Achse koaxial mit der Fahrzeuglängsachse 45 ist und dessen y- und z-Achse parallel zu der Fahrzeugquerachse 55 bzw. Fahrzeughochachse 48 verlaufen (vgl. Fig. 3A und 3B). Koordinaten in dem Laserkoordinatensystem werden mit dem Index LS und solche in dem Kamerakoordinatensystem mit dem Index V bezeichnet, während Koordinaten in dem Fahrzeugkoordinatensystem keinen Index tragen.

Der Ursprung des Laserscannerkoordinatensystems ist gegenüber dem Ursprung des Fahrzeugkoordinatensystems um einen Vektor $s_{LS}$ verschoben, der durch die Anbaulage des Laserscanners 14 an dem Fahrzeug 10 bestimmt und bekannt ist.

Entsprechend ist der Ursprung des Kamerakoordinatensystems gegenüber dem Ursprung des Fahrzeugkoordinatensystems um einen Vektor sv verschoben, der durch die Anbaulage der Videokamera 18 an dem Fahrzeug 10 bestimmt und bekannt ist.

Die Achsen der Koordinatensysteme des Laserscanner- bzw. Kamerakoordinatensystems sind im Allgemeinen gegenüber den entsprechenden Achsen des Fahrzeugkoordinatensystems gedreht. Mit dem Laserscannerkoordinatensystem sind in gleicher Weise auch die Abtastflächen gegenüber der Fahrzeuglängs- und -querachse gekippt. Die Orientierung wird durch Nickwinkel $\partial_{LS}$ und $\partial_V$ sowie Wankwinkel $\varphi_{LS}$ und $\varphi_V$ beschrieben. Weiterhin sind die Koordinatensysteme um einen Gierwinkel $\psi_{LS}$ bzw. $\psi_V$ gedreht.

Genauer geht das Laserscannerkoordinatensystem aus dem Fahrzeugkoordinatensystem hervor, indem man zuerst eine Translation um den Vektor $s_{LS}$ durchführt, dann nacheinander Rotationen mit dem Gierwinkel $\psi_{LS}$ um die verschobene z-Achse, mit dem Wankwinkel $\varphi_{LS}$ um die verschobene und gedrehte x-Achse und zuletzt mit dem Nickwinkel $\vartheta_{LS}$ um die verschobene und gedrehte y-Achse ausführt (vgl. Fig. 6).

Die Transformation eines Punktes mit Koordinaten X, Y, Z in dem Fahrzeugkoordinatensystem in Koordinaten $X_{LS}$, $Y_{LS}$, $Z_{LS}$ kann durch eine homogene Transformation mit einer Rotationsmatrix R mit Einträgen $r_{mn}$ und dem Translationsvektor $s_{LS}$ mit Komponenten $s_{LSx}$, $s_{LSy}$ und $s_{LSy}$ beschrieben werden:

$$\begin{pmatrix} X_{LS} \\ Y_{LS} \\ Y_{LS} \\ 1 \end{pmatrix} = \begin{pmatrix} r_{11} & r_{12} & r_{13} & s_{LSx} \\ r_{21} & r_{22} & r_{23} & s_{LSy} \\ r_{31} & r_{32} & r_{33} & s_{LSz} \\ 0 & 0 & 0 & 1 \end{pmatrix} \cdot \begin{pmatrix} X \\ Y \\ Z \\ 1 \end{pmatrix}$$

Die Komponenten des Translationsvektor $s_{LS}$ entsprechen den Koordinaten des Ursprungs des Laserkoordinatensystems im Fahrzeugkoordinatensystem.

Die Rotationsmatrix R wird aus den Elementardrehmatrizen

$$\mathbf{R}_\varphi = \begin{pmatrix} 1 & 0 & 0 \\ 0 & \cos\varphi_{LS} & -\sin\varphi_{LS} \\ 0 & \sin\varphi_{LS} & \cos\varphi_{LS} \end{pmatrix}$$

bei einer Drehung um die x-Achse,

$$\mathbf{R}_\vartheta = \begin{pmatrix} \cos\vartheta_{LS} & 0 & \sin\vartheta_{LS} \\ 0 & 1 & 0 \\ -\sin\vartheta_{LS} & 0 & \cos\vartheta_{LS} \end{pmatrix}$$

bei einer Drehung um die y-Achse, und

$$R_\psi = \begin{pmatrix} \cos\psi_{LS} & -\sin\psi_{\cdot LS} & 0 \\ \sin\psi_{LS} & \cos\psi_{LS} & 0 \\ 0 & 0 & 1 \end{pmatrix}$$

bei einer Drehung um die z-Achse durch Multiplikation entsprechend der Drehreihenfolge gebildet. Die Winkel werden jeweils im mathematisch positiven Sinne gezählt.

Die Reihenfolge der Drehung kann beliebig gewählt werden, muss jedoch für die Kalibrierung nach der Wahl beibehalten werden. Insofern definiert die Reihenfolge genau den Nick-, Wank- und den Gierwinkel. Im Beispiel wird zuerst um die z-Achse, dann um die x-Achse und zuletzt um die y-Achse gedreht (vgl. Fig. 6). Es ergibt sich dann

$$R = R_\vartheta R_\varphi R_\psi$$

Die Ausrichtung des Laserscanner 14 bzw. der Abtastflächen 28, 28', 28" und 28''' ist daher durch die Angabe von Nick-, Wank- und Gierwinkel beschreibbar, wobei der Nick- und der Wankwinkel die Orientierung relativ zu dem Fahrzeug bzw. der Ebene durch die Längs- und Querachsen 45 bzw. 55 wiedergibt.

Da bei der Kalibrierung die Koordinaten bzw. Daten im Laserscannerkoordinatensystem vorliegen, dient dieses als Ausgangspunkt. Die Koordinaten werden schrittweise ins Fahrzeugkoordinatensystem transformiert.

Dabei wird noch ein Zwischenkoordinatensystem verwendet, das aus dem Fahrzeugkoordinatensystem durch Verschiebung um den Vektor $s_{LS}$ und Drehung um die verschobene z-Achse um den Gierwinkel $\psi_{LS}$ erhalten wird. Koordinaten in diesem Koordinatensystem werden mit dem Index ZS bezeichnet.

Nick- und Wankwinkel ergeben sich aus der Bestimmung der Orientierung der Abtastflächen bzw. der $x_{LS}$-$y_{LS}$-Ebene des Laserscannerkoordinatensystems relativ zu dem Fahrzeug- bzw. Zwischenkoordinatensystem. Der Gierwinkel führt zu einer Drehung einer Bezugsrichtung des Laserscanner 14, beispielsweise der $x_{LS}$-Achse, in der x-y- bzw. xzs-yzs-Ebene und wird zuletzt als noch notwendige Rotation ermittelt.

Die Umrechnung der Koordinaten im Kamerakoordinatensystem in Koordinaten im Fahrzeugkoordinatensystem erfolgt analog unter Verwendung entsprechender Nick-, Wank- und Gierwinkel.

Bei dem erfindungsgemäßen Verfahren werden Gegenstandspunkten bzw. entsprechenden, mit dem Laserscanner 14 erfassten Abstandsbildpunkten Videobildpunkte des Videobildes zugeordnet. Zu der dazu notwendigen Beschreibung der Abbildungseigenschaften der Kamera wird ein Mattscheibenmodell verwendet (vgl. Fig. 7). Dieses ist ausreichend, da im Beispiel die Videobilder vor einer Verarbeitung entsprechend entzerrt werden.

Ein Objekt im Kamerakoordinatensystem $(x_v, y_v, z_v)$, dessen Ursprung im Brennpunkt des Abbildungssystems 36 liegt, wird auf die im Abstand f vom Brennpunkt liegende Abbildungsebene projiziert, in der ein kartesisches Koordinatensystem mit Achsen u und v definiert ist.

Die Bildpunktkoordinaten (u, *v*) in Pixeleinheiten eines Gegenstandspunktes mit Koordinaten Xv, Yv und Zv im Kamerakoordinatensystem lassen sich mit Hilfe der Strahlensätze, den in Bildpunkten angegebenen Brennweiten $f_u$ und $f_v$ und dem Schnittpunkt $(u_0, v_0)$ der $z_V$-Achse mit der Mattscheibe angeben:

$$u = u_0 - \frac{X_v}{Z_v} f_u \qquad\qquad v = v_0 - \frac{Y_v}{Z_v} f_v.$$

Die Kalibrierung wird nach einem Verfahren nach einer bevorzugten Ausführungsform der Erfindung folgendermaßen durchgeführt.

In dem ersten Schritt werden das Fahrzeug und die Kalibrierflächen, d.h. die Kalibrierkörper $22_1$ und $22_r$ sowie 24, 24' und 24" relativ zueinander so angeordnet, dass die Kante 52 des mittleren zweiten Kalibrierkörpers 24' auf der Fahrzeuglängsachse 45 und damit der x-Achse des Fahrzeugkoordinatensystems liegt. Weiterhin sind die beiden ersten Kalibrierkörper $22_1$ und $22_r$ auf gegenüberliegenden Seiten der Fahrzeuglängsachse 45 in einem Winkel von etwa 45° zu dieser angeordnet.

In dem folgenden Schritt werden ein Abstandsbild und ein Videobild der Szene erfasst und vorverarbeitet. Bei der Vorverarbeitung kann vorzugsweise eine Rektifikation der Videobilddaten, beispielsweise zur Beseitigung von Verzerrungen, durchgeführt werden. Das aktuelle Abstandsbild und das aktuelle Videobild werden dann zur weiteren Verwendung abgespeichert.

In den folgenden Schritten erfolgt zunächst die Ermittlung der Orientierung des Laserscanners 14 auf der Basis des erfassten Abstandsbildes, bei der der Nick- und der Wankwinkel bestimmt werden.

In einem Schritt wird für die wenigstens zwei Kalibrierobjekte $22_l$ und $22_r$ die Neigung eines Abtaststrahls bzw. eines radial von dem Laserscanner 14 ausgehenden virtuellen Strahls in der Abtastfläche ermittelt (vgl. Fig. 8 und 9). Dies sei am Beispiel der Abtastfläche 28 veranschaulicht.

Dazu wird für beide Kalibrierobjekte $22_1$ und $22_r$ jeweils zunächst aus den Abstandsbildpunkten, die Bereichen auf den jeweiligen beiden auf den Laserscanner 14 zugeneigten ersten Kalibrierflächen 46, 46' entsprechen, die Lage eines hinteren Bezugspunkts $P_h$ ermittelt. Abstandsbildpunkte auf den Kanten der Kalibrierflächen werden dabei nicht berücksichtigt. Entsprechend werden aus den Abstandsbildpunkten, die Bereichen auf der jeweiligen von dem Laserscanner 14 weg geneigten Kalibrierfläche 46" entsprechen, die Lage eines vorderen Bezugspunkts $P_v$ ermittelt. Die Bezugspunkte $P_h$ und $P_v$ geben jeweils die Höhe wieder, in der die Abtastfläche 28 die entsprechende Kalibrierfläche 46, 46' bzw. 42" schneidet. Weiterhin liegen sie auf einem virtuellen Abtaststrahl 56, der orthogonal zu einer für die Abstandsbildpunkte für den hinteren Bezugspunkt $P_h$ ermittelten Ausgleichsgeraden und einer für die Abstandsbildpunkte für den vorderen Bezugspunkt $P_v$ ermittelten Ausgleichsgeraden und durch den Laserscanner 14 bzw. den Ursprung des Laserscannerkoordinatensystems verläuft (vgl. Fig. 8).

Aus den Abstandsbildpunkten 57 für den hinteren Bezugspunkt $P_h$ und denen für den vorderen Bezugspunkt $P_v$ werden jeweils, beispielsweise durch lineare Regression, Ausgleichsgeraden (vgl. Fig. 8) ermittelt. Es werden dann als hintere und vordere Bezugspunkte $P_h$ bzw. $P_v$ die Schnittpunkte zwischen den Ausgleichsgeraden und einem virtuellen, zu diesen orthogonal und durch den Ursprung des Laserscannerkoordinatensystems verlaufenden Strahl 56 ermittelt (vgl. Fig. 8). Durch diese Art der Ermittlung der Lage der Bezugspunkte $P_h$ und $P_v$ wird der Einfluss von Ungenauigkeiten in der Winkelerfassung bei der Erfassung von Abstandsbildern sehr gering gehalten bzw. beseitigt.

Für diese Bezugspunkte $P_h$ bzw $P_v$ sind daher die Abstände $d_h$ und $d_v$ von dem Ursprung des Laserscannerkoordinatensystem sowie der entsprechende aus den Koordinaten in dem Laserkoordinatensystem zu berechnende Schwenkwinkel a bekannt bzw. werden aus den Abstandsbildpunkten leicht ermittelt.

Der vordere und der hintere Bezugspunkt weisen weiterhin jeweils, bedingt durch die unterschiedlichen Neigungen der Kalibrierflächen 46, 46' bzw. 46", unterschiedliche Höhen über der Aufstandsfläche 12 bzw. dem Fahrzeugkoordinatensystem auf, wenn der Laserscanner 14 bzw. die Abtastfläche nicht genau parallel zu der x-y-Ebene des Fahrzeugkoordinatensystems verläuft. Stellt ho den durch die Einbaulage des Laserscanners 14 im Fahrzeug bekannten Abstand des Ursprungs des Laserscannerkoordinatensystems bzw. der Abtastfläche von dem Fahrzeugkoordinatensystem in z-Richtung dar, so kann aus der Fig. 9 folgende Gleichung für die Neigung $\beta$ des virtuellen Strahls 56 in der Abtastfläche 28 hergeleitet werden:

$$\cos \beta = c_1 + c_2 \cdot \sin \beta$$

mit

$$c_1 = \frac{H - h_0}{d_h - d_v} \cdot \frac{B}{H} \quad \text{und} \quad c_2 = \frac{d_h + d_v}{d_h - d_v} \cdot \frac{B}{2H} .$$

In diese Gleichung geht ein vorgegebener Abstand der Kalibrierflächen 46, 46' und 46" von dem Laserscanner 14 nicht ein, so dass die Kalibrierflächen 46, 46' und 46" und das Fahrzeug 10 in dieser Beziehung keine genau vorgegebene Relativposition einzuhalten brauchen.

Bei dem Verfahren wird daher diese Gleichung für den Winkel $\beta$ unter Verwendung der bekannten bzw. ermittelten Werte für $d_h$, $d_v$, H, B und ho gelöst, was numerisch erfolgen kann. Die Werte können jedoch auch alternativ in eine analytisch gewonnene Lösung der Gleichung eingesetzt werden.

In einem folgenden Schritt wird, wenn die Abtastfläche 28 nicht in der $x_{LS}$-$y_{LS}$-Ebene des Laserscannerkoordinatensystems verläuft, die entsprechende Neigung des Laserscannerkoordinatensystems in der durch den Schwenkwinkel $\alpha$ für den virtuellen Strahl gegebenen Richtung näherungsweise für kleine Wankwinkel ermittelt, indem der ermittelte Winkel $\beta$ durch den Wert $\beta' = \beta - \varepsilon(\alpha)$ ersetzt wird, wobei $\varepsilon(\alpha)$ den für den Laserscanner 14 und die verwendete Abtastfläche 28 bekannten Neigungswinkel zwischen einem Strahl entlang der Abtastfläche 28 und der $x_{LS}$-$y_{LS}$-Ebene des Laserscannerkoordinatensystems bei dem Schwenkwinkel $\alpha$ bezeichnet.

Nach diesem Schritt gibt $\beta'$ daher für das entsprechende Kalibrierobjekt die Neigung des Laserscannerkoordinatensystems entlang der Richtung a in dem Laserscannerkoordinatensystem an.

Damit sind für die beiden Kalibrierflächen $22_l$ und $22_r$ links und rechts der Referenzlinie 44 jeweils Neigungswinkel $\beta_l$ bzw. $\beta_r$ der Abtastfläche 28 in den Richtungen $\alpha_l$ und $\alpha_r$ in dem Laserscannerkoordinatensystem ermittelt, die in den weiteren Schritten verwendet werden.

In dem folgenden Schritt werden aus den beiden Neigungswinkeln $\beta_1'$ und $\beta_r'$ in den Richtungen $\alpha_1$ und $\alpha_r$ in dem Laserscannerkoordinatensystem die Winkel $\vartheta_{LS}$ und $\varphi_{LS}$ zu dem Zwischenkoordinatensystem bzw. dem Fahrzeugkoordinatensystem berechnet. Wie bereits zuvor beschrieben geht das Laserkoordinatensystem aus dem Zwischenkoordinatensystem dadurch hervor, dass letzteres zunächst um den Winkel $\varphi_{LS}$ um die $x_{ZS}$-Achse und dann um den Winkel $\vartheta_{LS}$ um die gedrehte yzs-Achse gedreht wird.

Die hierzu verwendete Formel kann beispielsweise folgendermaßen erhalten werden. Es werden zwei Einheitsvektoren in dem Laserscannerkoordinatensystem ermittelt, die in den Richtungen $\alpha_1$ bzw. $\alpha_r$ und parallel zu der xzs-yzs-Ebene des Zwischenkoordinatensystem, d.h. mit den Neigungswinkeln $\beta_1'$ bzw. $\beta_r'$ gegenüber der $x_{LS}$-$y_{LS}$-Ebene des Laserscannerkoordinatensystem geneigt verlaufen. Das Vektorprodukt aus diesen Einheitsvektoren entspricht einem Vektor in $z_{LS}$-Richtung des Zwischenkoordinatensystems, dessen Länge gerade der Sinus des Winkels zwischen den beiden Einheitsvektoren ist. Das in den Koordinaten des Laserscannerkoordinatensystem berechnete Vektorprodukt wird in das Zwischenkoordinatensystem transformiert, in dem das Ergebnis bekannt ist. Aus der Transformationsgleichung erhält man folgende Formel für den Wankwinkel $\varphi_{LS}$

$$\varphi_{LS} = -\arcsin\frac{\cos\alpha_l\cos\beta_l'\sin\beta_r'-\cos\alpha_r\cos\beta_r'\sin\beta_l'}{\left(1-\left(\cos\alpha_l\cos\beta_l'\cos\alpha_r\cos\beta_r'+\sin\alpha_l\cos\beta_l'\sin\alpha_r\cos\beta_r'+\sin\beta_l'\sin\beta_r'\right)^2\right)^{\frac{1}{2}}}$$

bzw. den Nickwinkel $\vartheta_{LS}$

$$\vartheta_{LS} = -\arctan\frac{\sin\alpha_l\cos\beta_l'\sin\beta_r'-\sin\alpha_r\cos\beta_r'\sin\beta_l'}{\cos\beta_l'\cos\beta_r'\sin(\alpha_r-\alpha_l)}.$$

Obgleich die Werte für den Nick- und den Wankwinkel von den berechneten Schwenkwinkeln $a_l$ bzw. $a_r$ abhängen, werden zur Ermittlung im Wesentlichen Abstandsinformationen verwendet, da die Bezugspunkte im Wesentlichen auf der Basis von Abstandsinformationen ermittelt werden.

Bei dem Verfahren werden in diese beiden Formeln nur noch die entsprechenden Werte eingesetzt.

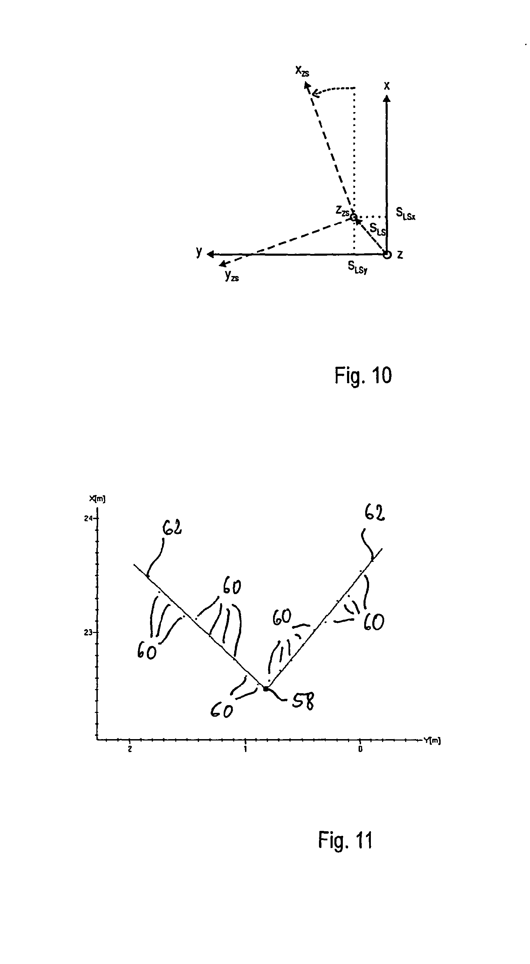

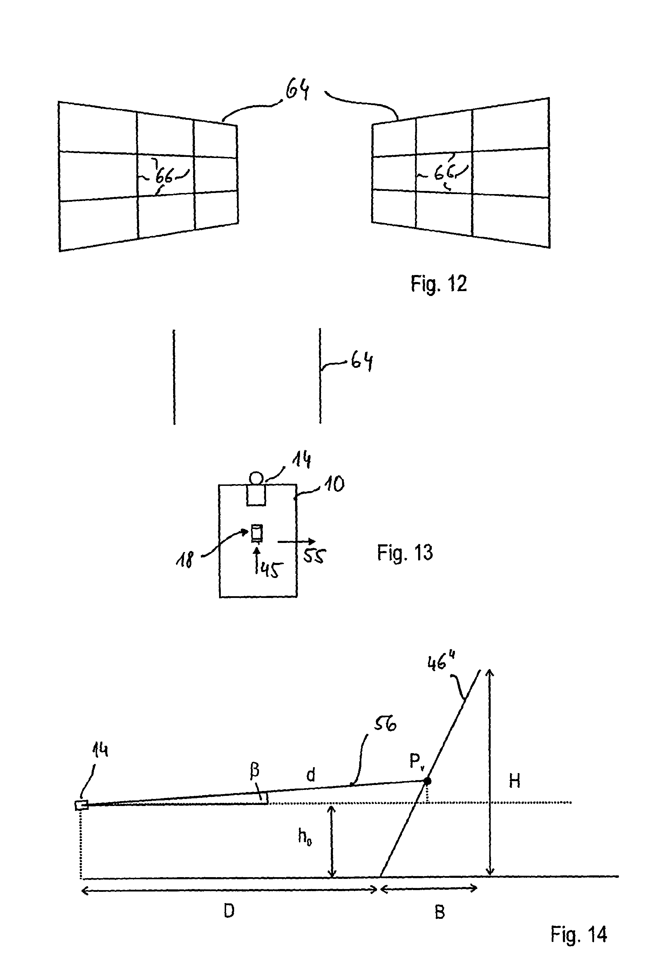

In den nächsten Schritten wird der verbleibende Gierwinkel $\psi_{LS}$ unter Verwendung des auf der Fahrzeuglängsachse 45 angeordneten zweiten Kalibrierobjekts 24 ermittelt (vgl. Fig. 11 und 12).

Dazu wird zunächst ein Referenzpunkt 58 des zweiten Kalibrierobjekts 24 ermittelt, der durch den Schnitt von zwei Konturlinien auf den zweiten Kalibrierflächen 50 und 50' gegeben ist. Die Konturlinien sind durch die auf den zweiten Kalibrierflächen erfassten Abstandsbildpunkte unter Berücksichtigung der bekannten Form der Kalibrierflächen, d.h. den Schnitt der Abtastfläche mit den zweiten Kalibrierflächen 50 und 50' bestimmt.

Der Referenzpunkt 58 ergibt sich durch die Schnitte der Abtastfläche 28 mit der Schnittgeraden der ebenen zweiten Kalibrierflächen 50, 50' bzw. durch den Schnittpunkt der durch die Abstandsbildpunkte 60 von Bereichen auf den zweiten Kalibrierflächen 50, 50' verlaufenden, Konturlinien entsprechenden Ausgleichsgeraden 62. Hierzu werden im Laserscannerkoordinatensystem durch die entsprechenden Abstandsbildpunkte 62 mittels linearer Regression Ausgleichsgeraden gelegt, deren Schnittpunkt dann ermittelt wird. Auch hierbei werden Abstandsbildpunkte auf Kanten nicht verwendet. (vgl. Fig. 12).

Die Koordinaten des so ermittelten Referenzpunktes 58 werden dann unter Verwendung der ermittelten Wank- und Nickwinkelwerte in Koordinaten in dem Zwischenkoordinatensystem umgerechnet. Zur Ermittlung des Gierwinkels wird ausgenutzt, dass die Lage des Referenzpunktes 58 in der y-Richtung des Fahrzeugkoordinatensystems bekannt ist: die Kante liegt auf der Referenzgerade 44 und damit gerade auf der Fahrzeuglängsachse bzw. der x-Achse und hat daher die y-Koordinate 0. Die x-Koordinate wird mit X bezeichnet, spielt aber im Folgenden keine Rolle. Unter Verwendung der Beziehung

$$\begin{pmatrix} X_{ZS} \\ Y_{ZS} \end{pmatrix} = R_\psi \left( s_{LS} + \begin{pmatrix} X \\ 0 \end{pmatrix} \right)$$

zwischen den Koordinaten $(X_{ZS}, Y_{ZS})$ des Bezugspunkts im Zwischenkoordinatensystem und den Koordinaten $(X, 0)$ im Fahrzeugkoordinatensystem mit dem durch die Einbaulage des Laserscanners 14 bekannten Verschiebungsvektor $s_{LS}=(s_{LSx}, s_{LSy})$ zwischen den Koordinatenursprüngen des Fahrzeugkoordinatensystems und des Zwischenkoordinatensystems kann folgende Gleichung für den Gierwinkel $\psi_{LS}$ erhalten werden:

$$Y_{ZS} \cos \psi_{LS} = s_{LSy} + X_{ZS} \sin \psi_{LS}.$$

Bei dem Verfahren wird diese Gleichung analog zu Bestimmung der Neigung numerisch oder analytisch für den Winkel $\psi_{LS}$ gelöst.

Damit ist die Orientierung des Laserscanners 14 relativ zu dem Fahrzeugkoordinatensystem vollständig bekannt.

Bei einer anderen Ausführungsform kann der tatsächliche Winkel zwischen einer auf die $x_{LS}$-$y_{LS}$-Ebene des Laserscannerkoordinatensystems senkrechten Ebene, in der der Winkel $\varepsilon$ liegt, und der auf die x-y-Ebene des Fahrzeugkoordinatensystems senkrechten Ebene, in der der Winkel $\beta$ ermittelt wird, genauer berücksichtigt werden. Hierzu werden ausgehend von dem nach dem ersten Ausführungsbeispiel ermittelten Wert Startwerte für den Nick- und ein Wankwinkel berechnet. Mit diesen Werten wird dann mittels bekannter trigonometrischer Beziehungen die Ausrichtung der Ebene, in der der Winkel $\varepsilon$ liegt, und der auf die x-y-Ebene des Fahrzeugkoordinatensystems senkrechte Ebene, in der der Winkel $\beta$ ermittelt wird, bestimmt. Bei bekannter Ausrichtung kann nun der Winkel $\varepsilon$ bzw. $\beta'$ in nächster Näherung bestimmt werden. Auf dieser Basis werden neue Werte für den Nick- und den Wankwinkel ermittelt. Durch Iteration, bei der die Werte für den Nick- und den Wankwinkel jeweils zu einem Endwert hin konvergieren, kann die Ausrichtung sehr genau ermittelt werden.

Auf der Basis der bekannten Orientierung des Laserscanners 14 kann nun die Orientierung der Videokamera 18 relativ zu dem Laserscanner 14 und damit dem Fahrzeugkoordinatensystem erfolgen.

Hierzu wird auf der Basis des mittels des Laserscanners 14 erfassten und in das Fahrzeugkoordinatensystems transformierten Abstandsbildes die Lage von wenigstens zwei Kalibriermerkmalen in dem Fahrzeugkoordinatensystem ermittelt. Diese werden unter Verwendung der bekannten Lage der Videokamera 18 in dem Fahrzeugkoordinatensystem und angenommener Rotationswinkel für die Transformation von dem Fahrzeugkoordinatensystem in das Kamerakoordinatensystem transformiert. Anhand des Kameramodells wird dann die auf der Basis des Abstandsbildes ermittelte Lage der entsprechenden Kalibriermerkmale in dem Videobild ermittelt.

Diese mittels des Abstandsbildes ermittelten Lagen in dem Videobild werden mit den tatsächlich erfassten Lagen in dem Videobild in der u-v-Ebene verglichen.

Durch ein numerisches Optimierungsverfahren, beispielsweise das Verfahren unter Verwendung von konjugierten Gradienten, werden die Rotationswinkel für die Koordinatentransformation zwischen Fahrzeugkoordinatensystem und Kamerakoordinatensystem so optimiert, dass die mittleren quadratischen Abständen zwischen den tatsächlichen Lagen der Kalibriermerkmale in dem Videobild und den auf der Basis des Abstandsbildes vorhergesagten Lagen minimiert werden oder der Betrag der absoluten oder relativen Änderung der Rotationswinkel einen vorgegebenen Schwellwert unterschreitet.

Im Beispiel werden als Kalibriermerkmale die Kreuzungspunkte der Muster auf den dritten Kalibrierflächen 54 bzw. Kalibriertafeln verwendet. Die Lagen werden dabei aus den Abstandsbildern dadurch bestimmt, dass die Lage der Bezugspunkte auf die x-y-Ebene des Fahrzeugkoordinatensystems in dem Fahrzeugkoordinatensystem ermittelt wird und als z-Koordinate der bekannte Abstand der Kreuzungspunkte von der Aufstandsfläche 12 bzw. der x-y-Ebene des Fahrzeugkoordinatensystems verwendet wird.

Die Kreuzungspunkte können in dem Videobild einfach anhand vorgegebener Templates gefunden werden.

Die Kalibrierung des Laserscanners und der Videokamera können auch unabhängig voneinander durchgeführt werden.

Bei einem anderen Ausführungsbeispiel werden bei der Ermittlung des Nick- und des Wankwinkels auf der Basis der ermittelten Neigungen der virtuellen Strahlen die Koordinaten der vorderen oder hinteren Bezugspunkte in dem Laserscannerkoordinatensystem sowie die z-Komponente der Lage in dem Fahrzeugkoordinatensystem ermittelt.

Auf der Basis der Koordinatentransformationen können dann der Wank- und der Nickwinkel ermittelt werden.

Bei einer weiteren Ausführungsform werden als zweite Kalibrierflächen 64 parallel verlaufende Wände in einer Produktionsstraße für das Fahrzeug 10 verwendet, auf denen parallel verlaufende Netzlinien 66 als Kalibriermerkmale zur Kalibrierung der Ausrichtung der Videokamera 16 aufgebracht sind (vgl. Fig. 12 und 13).

Zur Ermittlung des Gierwinkels werden hier wieder unter Verwendung von durch Abstandsbildpunkte auf den zweiten Kalibrierflächen 64 verlaufende Ausgleichsgeraden ermittelt und deren Winkel relativ zu der Fahrzeuglängsachse 45 bestimmt, der dem Gierwinkel entspricht. Auch hier werden wesentlich Abstandsdaten benutzt, sodass Fehler in der Winkelbestimmung nicht stark ins Gewicht fallen.

Bei noch einem dritten Ausführungsbeispiel werden nur zwei erste, quer zur Fahrzeuglängsachse voneinander beabstandete Kalibrierflächen verwendet, die jeweils wie die erste Kalibrierfläche 46" geneigt sind.

Für jede der ersten Kalibrierflächen 46" kann bei bekanntem vorgegebenem Abstand D der jeweiligen Kalibrierfläche 46" von dem Laserscanner 14 die Lage eines entsprechend dem ersten Ausführungsbeispiel ermittelten Bezugspunkts $P_v$ in z-Richtung des Fahrzeugkoordinatensystems ermittelt werden (vgl. Fig. 14). In dem Laserscannerkoordinatensystem hat dieser Punkt die $z_{LS}$-Koordinate 0. Es gilt

$$\cos\beta = \frac{h_0}{d} - \frac{DH}{dB} - \frac{H}{B}\sin\beta$$

bzw. nach Ermittlung von β wie im ersten Ausführungsbeispiel

$$z = h_0 + d \cdot \sin\beta\,.$$

Damit sind drei Punkte für die $x_{LS}$-$y_{LS}$-Ebene, die beiden Bezugspunkte der Kalibrierflächen und der Ursprung des Laserscannerkoordinatensystems bekannt, sodass hieraus der Nick- und der Wankwinkel ermittelt werden kann.

Bei einem vierten Ausführungsbeispiel werden die Abstandsbildpunkte in zwei Abtastflächen zusammen mit den gerade beschriebenen Kalibrierflächen verwendet, wodurch die Neigung entsprechender virtueller Strahlen relativ zu der Aufstandsfläche und hieraus Nick- und Wankwinkel ermitteln lassen.

Bezugszeichenliste

| | |
|---|---|
| 10 | Fahrzeug |
| 12 | Aufstandsfläche |
| 14 | Laserscanner |
| 16 | Videosystem |
| 18 | Videokamera |
| 20 | Datenverarbeitungseinrichtung |
| $22_l$, $22_r$ | erste Kalibrierobjekte |
| 24, 24', 24" | zweite Kalibrierobjekte |
| 26 | Erfassungsbereich |
| 28, 28', 28", 28''' | Abtastflächen |
| 30 | Laserstrahlbündel |
| 32 | Gegenstandspunkt |
| 34 | CCD-Flächensensor |
| 36 | Abbildungssystem |
| 38 | optische Achse |
| 40 | Videoerfassungsbereich |
| 42 | Überwachungsbereich |
| 44 | Referenzlinie |
| 45 | Fahrzeuglängsachse |
| 46, 46', 46" | erste Kalibrierflächen |
| 48 | Fahrzeughochachse |

| 50, 50' | zweite Kalibrierflächen |
|---------|-------------------------|
| 52 | Kante |
| 54 | dritte Kalibrierfläche |
| 55 | Fahrzeugquerachse |
| 56 | virtueller Abtaststrahl |
| 57 | Abstandsbildpunkte |
| 58 | Referenzpunkt |
| 60 | Abstandsbildpunkte |
| 62 | Ausgleichgeraden |
| 64 | zweite Kalibrierflächen |
| 66 | Netzlinien |

**Patentansprüche**

1. Verfahren zur wenigstens teilweisen Kalibrierung eines an einem Fahrzeug (10) gehaltenen Abstandsbildsensors (14) für elektromagnetische Strahlung, mittels dessen ein Erfassungsbereich (26) entlang wenigstens einer Abtastfläche (28, 28', 28'', 28''') abtastbar und ein entsprechendes Abstandsbild erfassbar ist, in Bezug auf eine Ausrichtung der Abtastfläche (28, 28', 28'', 28''') oder des Abstandsbildsensors (14) relativ zu dem Fahrzeug (10), bei dem mittels des Abstandsbildsensors (14) Abstände zwischen dem Abstandsbildsensor (14) und Bereichen auf wenigstens einer Kalibrierfläche (46, 46', 46'', 50, 50') ermittelt werden, und unter Verwendung der ermittelten Abstände ein Wert für eine die Ausrichtung wenigstens teilweise beschreibende Größe ermittelt wird.

2. Verfahren nach Anspruch 1,
**dadurch gekennzeichnet,**
**dass** eine Kalibrierfläche (46, 46', 46'', 50, 50') mit einer bekannten Form verwendet wird, auf der zur Kalibrierung mittels des Abstandsbildsensors (14) wenigstens zwei entlang der Abtastfläche (28, 28', 28'', 28''') benachbarte Bereiche ortsaufgelöst erfassbar sind.

3. Verfahren nach Anspruch 1 oder 2,
**dadurch gekennzeichnet,**
**dass** ein Abstandsbildsensor (14) kalibriert wird, mittels dessen der Erfassungsbereich (26) entlang wenigstens zweier verschiedener Abtastflächen (28, 28', 28'', 28''') abtastbar ist.

4. Verfahren nach einem der vorhergehenden Ansprüche,
**dadurch gekennzeichnet,**
**dass** ein Abstandsbildsensor (14) kalibriert wird, für den die Lage und/oder Ausrichtung der Abtastfläche (28, 28', 28'', 28''') relativ zu einem Koordinatensystem des Abstandsbildsensors (14) bekannt ist, dass für Abstandsbildpunkte des erfassten Abstandsbildes, die der Abtastfläche (28, 28', 28'', 28''') zugeordnet sind, Koordinaten in dem Koordinatensystem des Abstandsbildsensors (14) ermittelt werden, und
**dass** diese Koordinaten zur wenigstens teilweisen Ermittlung der Ausrichtung verwendet werden.

5. Verfahren nach Anspruch 3 oder Anspruch 3 und 4,
**dadurch gekennzeichnet,**
**dass** in den beiden Abtastflächen (28, 28', 28'', 28''') jeweils erfasste Bereiche gemeinsam zur wenigstens teilweisen Ermittlung der Ausrichtung verwendet werden.

6. Verfahren nach Anspruch 3 oder Anspruch 3 und 4,
**dadurch gekennzeichnet,**
**dass** aus den Abständen von erfassten Bereichen auf der Kalibrierfläche (46, 46', 46'', 50, 50') zu dem Abstandsbildsensor (14) für jede der Abtastflächen (28, 28', 28'', 28''') ein der jeweiligen Abtastfläche (28, 28', 28'', 28''') zugeordneter Wert für die die Ausrichtung wenigstens teilweise wiedergebende Größe ermittelt wird, und
**dass** aus den den Abtastflächen (28, 28', 28'', 28''') zugeordneten Werten ein Wert für die die Ausrichtung des Abstandsbildsensors (14) wenigstens teilweise wiedergebende Größe ermittelt wird.

7. Verfahren nach einem der vorhergehenden Ansprüche,
**dadurch gekennzeichnet,**

**dass** die Kalibrierfläche (46, 46', 46", 50, 50') eben ist.

8. Verfahren nach einem der vorhergehenden Ansprüche,
   **dadurch gekennzeichnet,**
   **dass** zur wenigstens teilweisen Bestimmung einer Orientierung der Abtastfläche (28, 28', 28", 28''') oder des Abstandsbildsensors (14) relativ zu dem Fahrzeug (10), insbesondere eines Nickwinkels, die Bereiche der Kalibrierfläche (46, 46', 46") jeweils relativ zu der Fahrzeuglängs- oder -hochachse in vorgegebener Weise geneigt sind, und
   **dass** aus den erfassten Abständen der von dem Abstandsbildsensor (14) erfassten Bereiche in Abhängigkeit von deren Neigungen ein Wert für eine die Orientierung wenigstens teilweise wiedergebende Größe, insbesondere den Nickwinkel, ermittelt wird.

9. Verfahren nach einem der vorhergehenden Ansprüche,
   **dadurch gekennzeichnet,**
   **dass** aus wenigstens zwei erfassten Abständen der Bereiche der Kalibrierfläche (46, 46', 46") ein Abstand der Kalibrierfläche (46, 46', 46") im Bereich der Abtastfläche (28, 28', 28", 28''') von dem Abstandsbildsensor (14) ermittelt wird, und
   **dass** ein Wert für eine die Orientierung der Abtastfläche (28, 28', 28", 28''') oder des Abstandsbildsensors (14) wenigstens teilweise wiedergebenden Größe, insbesondere den Nickwinkel, unter Verwendung des ermittelten Abstandes der Kalibrierfläche (46, 46', 46") ermittelt wird.

10. Verfahren nach einem der vorhergehenden Ansprüche,
    **dadurch gekennzeichnet,**
    **dass** zur wenigstens teilweisen Bestimmung der Orientierung, insbesondere des Nickwinkels, zwei in vorgegebener Lage zueinander benachbart angeordnete Kalibrierflächen (46, 46', 46") verwendet werden, deren zur Kalibrierung verwendete Bereiche in unterschiedlicher, vorgegebener Weise relativ zu der Fahrzeuglängs- oder -hochachse geneigt sind, dass mittels des Abstandsbildsensors (14) Abstände zwischen dem Abstandsbildsensor (14) und Bereichen auf den Kalibrierflächen (46, 46', 46") nahe der Abtastfläche (28, 28', 28", 28''') ermittelt werden, und
    **dass** zur Ermittlung eines Wertes für eine die Orientierung der Abtastfläche (28, 28', 28", 28''') oder des Abstandsbildsensors (14) wenigstens teilweise wiedergebenden Größe, insbesondere des Nickwinkels, Unterschiede der ermittelten Abstände verwendet werden.

11. Verfahren nach einem der vorhergehenden Ansprüche,
    **dadurch gekennzeichnet,**
    **dass** zur Ermittlung der Orientierung wenigstens zwei in einer Richtung quer zu einer Strahlrichtung des Abstandsbildsensors (14) voneinander beabstandete Kalibrierflächen (46, 46', 46") verwendet werden, auf denen Bereiche jeweils relativ zu der Fahrzeuglängs-oder -hochachse in vorgegebener Weise geneigt sind.

12. Verfahren nach Anspruch 11,
    **dadurch gekennzeichnet,**
    **dass** ein Winkel zwischen Verbindungslinien zwischen den Kalibrierflächen (46, 46', 46") und dem Abstandsbildsensor (14) zwischen 5° und 180° liegt.

13. Verfahren nach einem der vorhergehenden Ansprüche,
    **dadurch gekennzeichnet,**
    **dass** die Werte der die Orientierung beschreibenden Größen in Abhängigkeit voneinander ermittelt werden.

14. Verfahren nach einem der vorhergehenden Ansprüche,
    **dadurch gekennzeichnet,**
    **dass** zur Ermittlung einer Drehung einer Bezugsrichtung in der Abtastfläche (28, 28', 28", 28''') oder einer Bezugsrichtung des Abstandsbildsensors (14) wenigstens näherungsweise um die Fahrzeughochachse oder eine Normale auf die Abtastfläche (28, 28', 28", 28''') wenigstens eine Kalibrierfläche (50, 50') verwendet wird, deren Form und Ausrichtung relativ zu einer Bezugsrichtung des Fahrzeugs (10) vorgegeben ist,
    **dass** die Lagen von wenigstens zwei Bereichen auf der Kalibrierfläche (50, 50') mittels des Abstandsbildsensors (14) erfasst werden, und
    **dass** in Abhängigkeit von den ermittelten Lagen ein Wert einer einen Winkel der Drehung wiedergebenden Größe, insbesondere eines Gierwinkels, ermittelt wird.

**15.** Verfahren nach Anspruch 14,
**dadurch gekennzeichnet,**
**dass** zwei Kalibrierflächen (50, 50') verwendet werden, deren Form vorgegeben ist und die in einer Ebene parallel zu einer Aufstandsfläche (12), auf der das Fahrzeug (10) steht, relativ zueinander geneigt sind, wobei die Ausrichtung wenigstens einer der Kalibrierflächen (50, 50') relativ zu einer Bezugsrichtung des Fahrzeugs (10) vorgegeben ist,
**dass** die Lagen von jeweils wenigstens zwei Bereichen auf jeder der Kalibrierflächen (50, 50') mittels des Abstandsbildsensors (14) erfasst werden, und
**dass** in Abhängigkeit von den Lagen der Wert der Größe ermittelt wird.

**16.** Verfahren nach Anspruch 14,
**dadurch gekennzeichnet,**
**dass** zwei Kalibrierflächen (50, 50') verwendet werden, deren Form und deren Lage zueinander und wenigstens teilweise zu dem Fahrzeug (10) vorgegeben ist und die in den Abschnitten in Richtung einer Aufstandsfläche (12), auf der das Fahrzeug (10) steht, relativ zueinander geneigt sind,
**dass** mittels des Abstandsbildsensors (14) auf jeder der Kalibrierflächen (50, 50') wenigstens zwei Abstandsbildpunkte erfasst werden, und
auf der Basis der erfassten Lagen der Abstandsbildpunkte, der Form der Kalibrierflächen (50, 50') und der relativen Lagen der Kalibrierflächen (50, 50') zueinander und zu dem Fahrzeug (10) die Lage eines durch die Kalibrierflächen (50, 50') gegebenen Referenzpunkts ermittelt und mit einer vorgegebenen Soll-Lage in Beziehung gesetzt wird.

**17.** Verfahren nach Anspruch 16,
**dadurch gekennzeichnet,**
**dass** mittels der erfassten Abstandsbildpunkte Konturlinien auf den Kalibrierflächen (50, 50') ermittelt werden, und
**dass** aus den Konturlinien die Lage des Referenzpunktes ermittelt wird.

**18.** Verfahren nach Anspruch 16 oder 17,
**dadurch gekennzeichnet,**
**dass** die Kalibierflächen eben sind, und
**dass** der Referenzpunkt auf einer Schnittlinie der durch die Kalibrierflächen (50, 50') gegebenen Ebenen liegt.

**19.** Verfahren nach einem der vorhergehenden Ansprüche,
**dadurch gekennzeichnet,**
**dass** eine Videokamera (18) zur Erfassung von Videobildern wenigstens eines Teils des Erfassungsbereichs (26) des Abstandsbildsensors (14) wenigstens teilweise in Bezug auf eine Ausrichtung relativ zu dem Abstandsbildsensor (14) und/oder dem Fahrzeug (10) kalibriert wird, indem
die Lage einer Fläche (54) für die Videokalibrierung mittels des Abstandsbildsensors (14) unter Berücksichtigung der Kalibrierung des Abstandsbildsensors (14) ermittelt wird,
die Lage eines Kalibriermerkmals auf der Fläche (54) für die Videokalibrierung mittels der Videokamera (18) erfasst wird, und
aus der Lage des Kalibriermerkmals in dem Videobild und der Lage der Fläche (54) für die Videokalibrierung der Wert einer die Ausrichtung wenigstens teilweise wiedergebenden Größe ermittelt wird.

**20.** Verfahren nach Anspruch 19,
**dadurch gekennzeichnet,**
**dass** in Abhängigkeit von mittels des Abstandsbildsensors (14) erfassten Lagekoordinaten des Kalibriermerkmals mittels einer Vorschrift zur Abbildung von Strahlen im dreidimensionalen Raum auf eine Sensorfläche der Videokamera (18), vorzugsweise mittels eines Kameramodells, eine Lage des Kalibriermerkmals in dem Bild ermittelt wird.

**21.** Verfahren nach Anspruch 19 oder 20,
**dadurch gekennzeichnet,**
**dass** die Fläche (54) zur Videokalibrierung in bekannter Lage zu den Kalibrierflächen (50, 50') zur Ermittlung zur Ermittlung einer Drehung einer Bezugsrichtung in der Abtastfläche (28, 28', 28", 28''') oder einer Bezugsrichtung des Abstandsbildsensors (14) wenigstens näherungsweise um die Fahrzeughochachse oder eine Normale auf die Abtastfläche (28, 28', 28", 28''') angeordnet und insbesondere mit diesen verbunden ist.

**22.** Verfahren nach Anspruch 19 oder 20,
**dadurch gekennzeichnet,**
**dass** das Kalibriermerkmal auf einer der Kalibrierflächen (50, 50') gebildet ist.

**23.** Verfahren nach einem der Ansprüche 19 bis 22,
**dadurch gekennzeichnet,**
**dass** mittels des Kalibriermerkmals interne Parameter eines Kameramodells der Videokamera (18) ermittelt werden.

Fig. 1

Fig. 2

Fig. 3

Fig. 4

Fig. 5A

Fig. 5B

Fig. 6

Fig. 7

EP 1 615 047 A2

x [m]

15

14

$P_h$

57

56

57

$P_v$

57

12    11    10    y [m]

Fig. 8

46⁴    46    22₆

28    56

14

$d_v$    $P_v$    $d_h$    $P_h$

β

$h_0$

H

B

Fig. 9

Fig. 10

Fig. 11

Fig. 12

Fig. 13

Fig. 14